# EUROPEAN PATENT SPECIFICATION

(11) **EP 0 468 107 B1**
(45) Date of publication and mention of the grant of the patent: **09.07.1997**
(21) Application number: 90308034.9
(22) Date of filing: 23.07.1990
(51) Int. Cl.: F16H 3/089

(54) **Transmission**
Getriebe
Transmission

(43) Date of publication of application: 29.01.1992
(73) Proprietor: Tseng, Sheng-Tsai, Long Tan Hsian, Taoyuan Hsien (TW)
(72) Inventor: Tseng, Sheng-Tsai, Long Tan Hsian, Taoyuan Hsien (TW)
(74) Representative: Woodward, John Calvin

(56) References cited:
- EP-A- 0 240 901
- CH-A- 187 929
- GB-A- 335 580
- GB-A- 486 567
- GB-A- 2 205 366
- US-A- 1 353 240
- US-A- 2 086 563

## Description

The present invention relates to a transmission, and more particularly to a vehicle-used totally meshing automatic transmission.

All experienced vehicle drivers know that to drive car with automatic transmission is much easier than to drive a car with a manual transmission. Because when driving a manual-transmission car, each gear-change procedure requires six steps, i.e. releasing the accelerator, depressing the clutch pedal, moving the gear lever from its original position into new position, releasing the clutch pedal, and then depressing the accelerator. On a road with complicated traffic, doing such steps repeatedly will naturally make the driver bothered and impatient, and danger is apt to be caused. Moreover, when changing gear, the accelerator is released to thus cause power loss, and when gear changing occurs during going up an inclined plane, if the gear lever is not properly moved to its new position, the engine might stall. Furthermore, because the gear-change procedure is too complicated, the driver often is not willing to change gear when it is required. Therefore, the engine often operates at an improper rotating speed to waste energy and cause engine damage. On the other hand, conventional automatic transmissions have quite complex structures including planet gear sets, clutch, brake, controller, etc. and the manufacturing cost is relatively high, and all the elements require regular adjustment to increase service cost. Moreover, the transmission efficiency of automatic transmissions is low and the power loss thereof is 18% greater than manual transmissions. Thus, the automatic transmissions cannot be popularly applied.

Therefore, step less transmissions have been developed to improve the above two transmissions. Two advantages of step less transmissions are first the structure is simple and it can be easily controlled, and second the engine can always operate at economic speed to output power with highest efficiency. However, step less transmissions have two shortcomings, one of which is the speed-changing control is slow and often it will change shift position by means of abruptly depressing the accelerator, and the other of which is the driving chain is closely clamped the wheel disks and thus the frictional loss is very large. Step less transmissions are thus not widely used due to the above two drawbacks.

From US-A 2 086 563 is known a transmission with a housing, an input shaft and an output shaft, said transmission providing a plurality of gear ratios and further comprising
- a counter shaft;
- a driving gear assembly having several driving gears the number of which equals to that of the gear ratios to be selected, said driving gears having different diameters and being fitted on said counter shaft in sequence from the small diameter one to the large diameter one;
- a forward drive gear ratio shift control assembly;
- a reverse gear assembly having a reverse gear fitted on the rear end of said counter shaft to rotate therewith, said reverse gear engaging an idle gear which meshes with a gear arranged on said output shaft;
- a driven gear assembly having several driven gears the number of which equals the sum of the reverse and driving gears, said driven gears having different diameters and being fitted on said output shaft in sequence from a small diameter one to a large diameter one and meshing with said driving and idler gears, each driven gear having a coupling means which connects said driven gear with said output shaft whereby when said driving gears rotate, the driven gears meshing therewith are driven to rotate and a selected gear coupled to the output shaft rotationally drives the output shaft; and
- a forward/reverse/neutral drive mode shift control assembly being fitted on said output shaft and including a control means to control said coupling means to select either a forward or reverse gear ratio or the neutral shift.

Therefore, a new transmission with high transmission efficiency is required to eliminate the aforesaid problems.

It is a primary object of this invention to provide a transmission using a microprocessor which can, according to the speed of rotation of the engine, command a stepping motor to drive a shifting disk to automatically shift into a proper position. The control thereof is sensive and the action is actual so that the engine can be kept in most economic operating state with highest efficiency.

It is a further object of this invention to provide a totally-meshing automatic transmission having the advantages of simplicity and high driving efficiency of manual transmissions without the disadvantages of the complex operating procedure thereof and having better control effects than known automatic transmissions.

It is a still further object of this invention to provide a transmission wherein, when changing gear, the vehicle can be continuously accelerated without interrupting the power transmission and more gears can be added without increasing the complexity of structure and operation and by means of the microprocessor, the vehicle can be actually accelerated with strong and steady effect.

According to the present invention there is provided a transmission comprising:
a housing, an input shaft and an output shaft;
the input shaft having a front half portion and a rear half portion;
a driving gear assembly having several driving gear sleeves the number of which is equal to the number of gear ratios of the transmission, the driving gear sleeves having respective different diameters and being fitted on the front half portion of the input shaft in sequence from the smallest diameter one to the largest diameter one, each driving gear sleeve not being permanently rotatably driven by the input shaft;
a forward gear control assembly having several slide sleeves with different diameters, the number of which is equal to that of the gear ratios, the slide sleeves being fitted on the rear half portion of the input shaft in sequence from the smallest diameter one to the largest diameter one, a first control means being used to control the engagement and separation of the slide sleeves and corresponding driving gear sleeves to select the gear ratio, each slide sleeve being rotatably driven by the input shaft and being capable of engaging its corresponding driving gear sleeve to cause rotation thereof;
a reverse gear assembly having a reversing gear fitted on the rear end of the input shaft, the reversing gear engaging an idler gear;
a driven shaft having a front portion, a middle portion and a rear portion;
a driven gear assembly having several driven gear sleeves and a driven gear the combined number of which is equal to the number of driving gear sleeves, the driven gear sleeves having respective different diameters and being fitted on the front portion of the driven shaft in sequence from the smallest diameter one to the largest diameter one and meshing with respective driving gear sleeves, each driven gear sleeve having a third coupling means which connects the driven gear sleeves with one another and connects the driven gear sleeves with the driven shaft whereby, when each driving gear sleeve rotates, the driven gear sleeve meshing therewith is driven to rotate and rotationally drives in inward sequence each driven gear sleeve and the driven shaft;
a forward/reverse gear assembly having two sleeves with different diameters, the sleeves being fitted on the rear portion of the driven shaft in sequence from the smaller diameter one to the larger diameter one, one of the sleeves being a forward sleeve, the other of the drive sleeves being a reverse sleeve having a gear which meshes with the idler gear, each sleeve having a fourth coupling means which connects the driven shaft with each sleeve whereby the driven shaft or idler gear can rotationally drive each sleeve;
a forward/reverse/neutral control assembly having two slide sleeves with different diameters, the slide sleeves being fitted on the middle portion of the driven shaft with the smaller diameter one within the larger diameter one, a second control means being used to control the separation and engagement of the slide sleeves and the forward/reverse sleeves to select forward or reverse or neutral gear, each slide sleeve rotationally driving a corresponding sleeve; and
the output shaft being connected to the forward/reverse gear assembly.

Embodiments of the invention will now be described with reference to the following detailed description and drawings, in which:
Fig.1 is a sectional view of a transmission in a neutral shift state;
Fig.2 is a sectional view of an input shaft of the transmission in a non-fitted state;
Fig.3 is a view similar to Fig.2, in which the input shaft is in a fitted state;
Fig.4 is a sectional view of a gear-shifting disk in its neutral state;
Fig.5 is a sectional view similar to Fig.4, in which the shifting gear disk is in a first ratio state;
Fig.6 is a sectional view of the transmission in its first ratio state;
Fig.7 is a sectional view of the gear-shifting disk in its third ratio state;
Fig.8 is a sectional view of the transmission in its third ratio state;
Fig.9 is a sectional view of the gear-shifting disk in its fifth ratio state;
Fig.10 is a sectional view of the transmission in its fifth ratio state;
Fig.11-1 is a sectional view of forward/reverse/neutral gear controller in which the shifting disk thereof is in its neutral state;
Fig.11-2 is a sectional view corresponding to Fig.11-1, in which the shifting disk is in its reverse gear state;
Fig.11-3 is a sectional view corresponding to Fig.11-1, in which the shifting disk is in its forward gear state;
Fig.12 is a sectional view of the transmission in its reverse gear state;
Fig.13 is a sectional view of a second input shaft in a non-fitted state;
Fig.14 is a sectional view corresponding to Fig.13, in which the input shaft is in its fitted state;
Fig.15 is a sectional view of a third input shaft in its non-fitted state;
Fig.16 is a sectional view corresponding to Fig.15, in which the input shaft is in its fitted state;
Fig.17 is a perspective and partially sectional view of a fourth input shaft;
Fig.18 is a sectional view of a fourth input shaft in its non-fitted state; and
Fig.19 is a sectional view corresponding to Fig.18 in which the input shaft is in its fitted state.

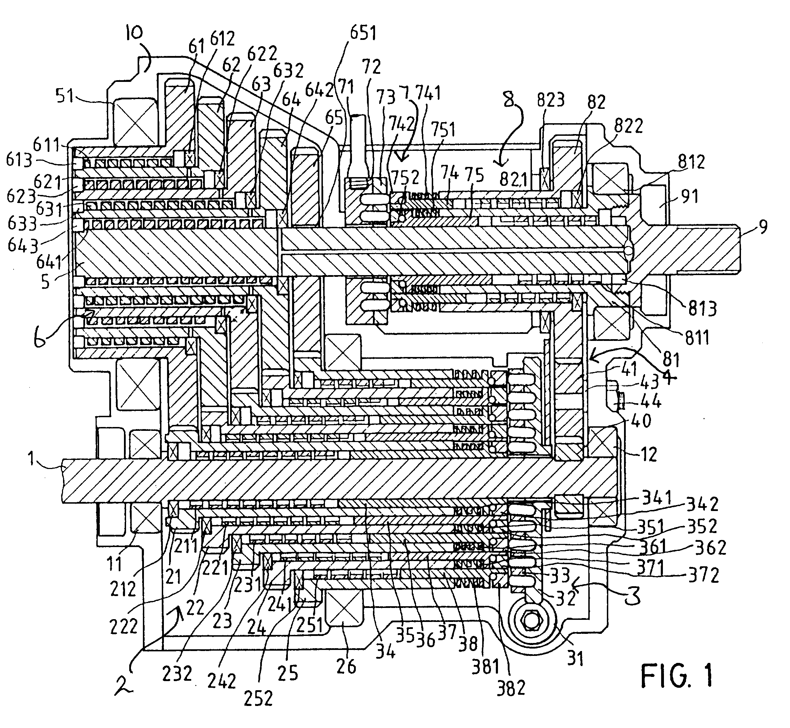

Please first refer to Fig.1. The transmission of the embodiment of the present invention includes an input shaft 1, a driving gear assembly 2, a forward gear control assembly 3, a reverse gear set 4, a driven shaft 5, a driven gear assembly 6, a forward/reverse/neutral shift control assembly 7, a forward/reverse gear assembly 8, an output shaft 9 and a housing 10.

The input shaft 1 extends into the housing 10 and serves as a driving shaft. The driving gear assembly 2 includes five driving gear sleeves 21,22,23,24,25 with increasing diameters. The number of the driving gear sleeves equals to that of the shifts. The five driving gear sleeves are telescoped on the input end portion of the input shaft 1 in such a manner that the input shaft 1 is loosely sleeved by a driving first-ratio spring 211 which is sleeved by the driving first-ratio gear sleeve 21 which is further sleeved by a driving second-ratio spring 221 which is sleeved by the driving second-ratio gear sleeve 22 which is sleeved by a driving third-ratio spring 231 which is further sleeved by the driving third-ratio gear sleeve 23 which is sleeved by a driving fourth-ratio spring 241 which is sleeved by the driving fourth-ratio gear sleeve 24 which is further sleeved by a driving fifth-ratio spring 251 which is finally sleeved by the driving fifth-ratio gear sleeve 25.

Each driving shift spring is not directly closely sleeved on its lower driving shift gear sleeve and a clearance exists therebetween. The driving shift gear sleeves are respectively associated with bearings 212 ,222,232,242,252 and a bearing 26 is disposed externally to connect the whole driving gear assembly 2 with the housing 10.

The forward gear control assembly 3 is fitted on the other end of the input shaft 1 by a selectively rotatable screw rod 31 meshing with a shift-gear disk 32 which is fitted on other end of the input shaft. Inside the shiftgear disk is disposed a forward gear engaging disk 33 and a driving first-ratio slide sleeve 34 is disposed on the input shaft which is sleeved by a driving first-ratio slide sleeve torque spring 341. The thickness of the driving first-ratio slide sleeve corresponds to that of the driving first-ratio spring and the thickness of the driving first-ratio slide sleeve torque spring 341 is fitted a driving second-ratio slide sleeve 35 which is sleeved by a driving second-ratio slide sleeve torque spring 351 which is sleeved by a driving third-ratio slide sleeve 36 which is sleeved by a driving third-ratio slide sleeve torque spring 361 which is further sleeved by a driving fourth-ratio slide sleeve 37 which is sleeved by a driving fourth-ratio slide sleeve torque spring 371 which is finally sleeved by a driving fifth-ratio slide sleeve 38 which is sleeved by a driving fifth-ratio slide sleeve torque spring 38. Each driving ratio slide sleeve torque spring is disposed between a flange of each slide sleeve and each gear sleeve. The thickness of each driving shift slide sleeve corresponds to that of each driving shift spring and the thickness of each driving shift slide sleeve torque spring corresponds to that of each driving shift gear sleeve to form several layers. Near the forward gear engaging disk 33, each driving shift slide sleeve is associated with a bearing 342, 352, 362, 372, 382. Therefore, the driving gear assembly 2 and forward gear control assembly 3 are formed by several layers and fitted on the left and right sides of the input shaft 1. At an end opposite to the input end of the input shaft 1 is fitted a reverse gear 40 which engages an idler gear 41 which engages a mounting shaft 43 through a bearing. The mounting shaft protrudes beyond the housing 10 to be fixed by a nut 44. At the input end and the other end of the input shaft are disposed bearings 11,12 associated with the housing 10 at an inner lower portion thereof.

The driven gear assembly 6 includes four driven gear sleeves 64, 63, 62, 61 and a driven gear 65 with increasing diameters. The combined number of the driven gear and sleeves also equals that of the ratios. The driven gear sleeves are telescoped on the driven shaft 5 corresponding to the driving gear assembly. The other end of the driven shaft 5 engages an output shaft 9 and the driven shaft 5 is disposed at an inner upper portion of the housing 10 in parallel to the input shaft 1. The driven shaft 5 supports a driven fifth-ratio gear 65 which is engaged with the driven shaft 5 by a key 651. The teeth of the driven fifth-ratio gear 65 mesh with the teeth of the driving fifth-ratio gear sleeve 25. The driven shaft 5 is sleeved by a driven fourth-ratio spring 641 which is sleeved by a driven fourth gear sleeve 64 which is sleeved by a driven third-ratio spring 631 which is sleeved by a driven third-ratio gear sleeve 63 which is sleeved by a driven second-ratio spring 621 which is sleeved by a driven second-ratio gear sleeve 62 which is sleeved by a driven first-ratio spring 611 which is finally sleeved by a driven first-ratio gear sleeve 61. Each driven shift spring is not directly closely fitted on each driven shift gear sleeve. Each driven shift gear sleeve engages a bearing 612,622,632, 642 at one end and engages a bearing 613, 623, 633, 643 at the other end. The teeth of each driven ratio gear sleeve and gear mesh with the teeth of each corresponding driving shift gear sleeve. The driven gear assembly 6 is mounted in the housing 10 by a bearing 51.

The forward/reverse/neutral shift control assembly 7 is connected to a shifting disk 72 by a manual control lever 71 extending into the housing 10 and fitted to one end of the driven shaft 5 near the driven gear assembly 6. The control assembly 7 is further connected with a forward/reverse gear engaging disk 73 at the other end of the shifting disk and is fitted to the driven shaft 5 by two layers of slide sleeves. The inner layer is a forward gear slide sleeve 75 which is sleeved by a forward gear slide sleeve torque spring 751 located between a flange of the forward gear slide sleeve and a forward gear sleeve 81. One end of the forward gear slide sleeve 75 is connected to a reverse gear slide sleeve 74 of outer layer by a bearing 752. The reverse gear slide sleeve 74 is sleeved by a reverse gear slide sleeve torque spring 741 located between a flange of the reverse gear slide sleeve and a reverse gear sleeve 82. One end of the reverse gear slide sleeve is connected with the housing 10 by a bearing 742. The forward/reverse gear assembly 8 is connected with the forward/reverse/neutral shift control assembly 7. The forward/reverse gear assembly 8 is formed by two layers of gear sleeves. The inner layer is a forward gear sleeve 81 and a forward gear spring 811 is fitted therein. The forward gear spring 811 is not directly closely fitted on the driven shaft. The forward gear sleeve is connected with the housing 10 by a bearing 812 near the output shaft 9 and is connected with the driven shaft by a bearing 813. The thickness of the forward gear spring corresponds to that of the forward gear slide sleeve, and the thickness of the forward gear sleeve corresponds to that of the forward gear slide sleeve torque spring. The forward gear sleeve is sleeved by a reverse gear sleeve 82 and a reverse gear spring 821 is fitted therein and is not directly closely fitted on the forward gear sleeve. The reverse gear sleeve is connected with the housing 10 by a bearing 822 near the output shaft. The thickness of the reverse gear spring corresponds to that of the reverse gear slide sleeve and the thickness of the reverse gear sleeve corresponds to that of the reverse gear slide sleeve torque spring. The teeth of the reverse gear sleeve mesh with the teeth of the idler gear and the driven shaft 5 is screwed to the output shaft 9 at one end of the forward gear sleeve. The output shaft is mounted in the housing 10 by a bearing 9 and extends outside the housing 10 for driving.

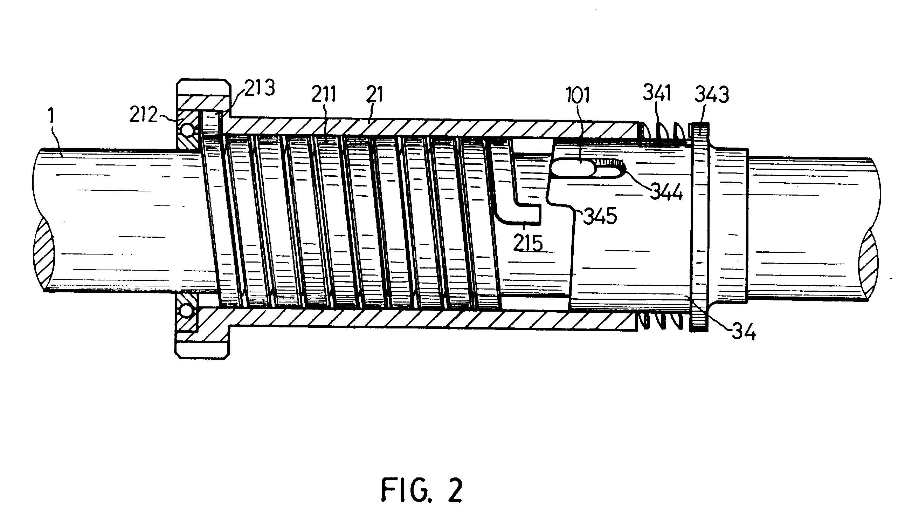

As shown in Fig.2, the primary structure of this embodiment of the invention is illustrated. The input shaft 1 is loosely sleeved by the driving first-ratio spring 211 which is sleeved by the driving first-ratio gear sleeve 21. A clearance therefore exists between the driving first-ratio spring and input shaft. The driving first-ratio spring is kept in a loose state and one end thereof is fixed on a toothed end of the inner surface of the driving first-ratio gear sleeve at position 213. Each gear sleeve is generally formed with an extending gear tooth portion inner side of which is associated with a ball bearing. Therefore, the gear tooth end is pivoted to the input shaft by a bearing 212 and the other end thereof is fitted to a driving first-ratio slide sleeve 34 located on the input shaft. One end of the slide sleeve 34 has a flange 343 the thickness of which equals that of the driving first-ratio gear sleeve. Between the outer end of the driving first-ratio gear sleeve and the flange of the driving first-ratio slide sleeve is disposed a driving first-ratio slide sleeve torque spring 341. A slot 344 is formed on the proper portion of the driving first-ratio slide sleeve. The slot 344 corresponds to a projection 101 on the input shaft, permitting the slide sleeve to slide over a certain distance. The lower end edge of the slide sleeve has a recess 345 which can receive the other end 215 of the driving first-ratio spring. Fig.2 shows that the slide sleeve is not engaged with the spring and the projection on the input shaft is located in the slot of the slide sleeve near the spring to only drive the slide sleeve, making the same rotate together with the input shaft.

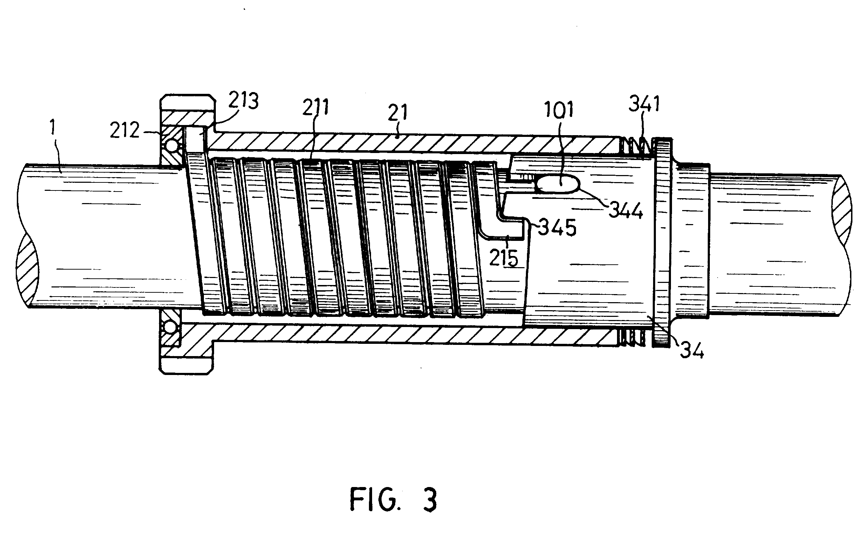

Fig.3 shows that the driving first shift slide sleeve is forced to move towards the driving first-ratio spring end 215, making the spring end 215 go into the recess 345 of the slide sleeve and press the driving first-ratio spring. Because the input shaft is rotated, making the driving first-ratio slide sleeve rotate in the same direction and the driving first-ratio spring is pressed to closely engage with the output shaft, the driving first-ratio spring will rotate in the same direction, and because the other end of the driving first-ratio spring is engaged with the driving first-ratio gear sleeve, the driving first-ratio gear sleeve will also rotate in same direction.

The projection 101 of the input shaft engages with the slot of the slide sleeve away from the spring. When not forced, the restoring force of the driving first-ratio slide sleeve torque spring 341 will restore the sleeve. At this time, only the projection drives the slide sleeve to rotate in the same direction. Because the driving first-ratio spring is not forced to engage with the input shaft, therefore the driving first-ratio spring and driving first-ratio gear sleeve both will not rotate following the input shaft. This is the character of this embodiment of the present invention. The driving gear assembly and forward/reverse gear assembly are disposed according to the same principle.

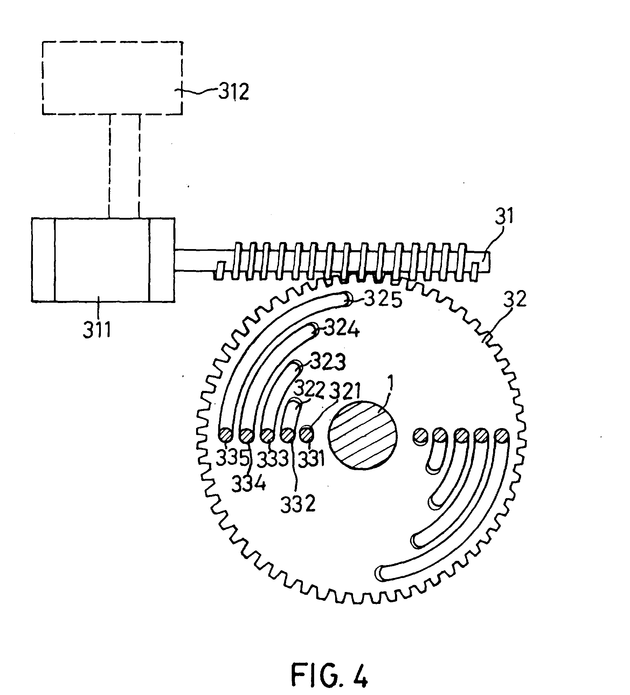

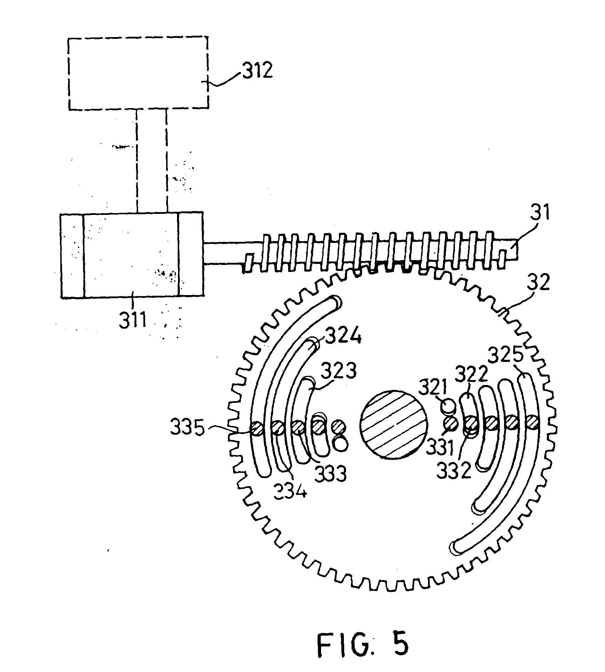

In Fig.4, the forward gear control assembly 3 is partially shown. A five forward ratio engaging disk 33 is connected with a shifting gear disk 32. The teeth of the shifting gear disk mesh with the thread of a threaded rod 31. The threaded rod is controllably rotated by a stepping motor 311 which is controlled by a microprocessor 312 which controls the torque output to guide the threaded rod to rotate and make the gear-shifting disk 33 rotate. The microprocessor has many detecting measuring devices respectively connected with the input shaft, output shaft, accelerator, carburettor, brake disk and clutch to feed back various state data to the microprocessor for calculating the best present rotating speed data and determining the gear ratio and sending to the stepping motor for execution. Fig.4 shows a neutral state wherein the gear-shifting disk is fitted to the input shaft 1. Two sides of the gear-shifting disk are formed with five different shifting slots 321,322,323,324, 325. The five pairs of shifting slots respectively receive engaging keys 331, 332,333,334,335 of the forward ratio engaging disk. The five pairs of shifting slots are formed in the rotating direction of the gear and the interval therebetween is about 20 degrees. The first shift slot 321 is located at zero degrees, engaging with a first shift engaging key 331, and the second shift slot 322 is located within zero degrees to 20 degrees, engaging with a second shift engaging key 332, and the third shift slot 323 is located within zero degrees to 40 degrees, engaging with a third shift engaging key 333, and the fourth shift slot 324 is located within zero degrees to 60 degrees, engaging with a fourth shift engaging key 334, and the fifth shift slot 325 is located within zero degrees to 80 degrees, engaging with a fifth shift engaging key 335. The left keys will go upward and the right keys will go downward. On the engaging disk, two corresponding keys are located respectively at zero degrees and 180 degrees positions. If the stepping motor 311 forces the threaded rod to rotate the gear-shifting disk, a state as in Fig.5 will be achieved wherein the first shift engaging key 331 slides away from the first shift slot 321 and the other second, third, fourth and fifth shift engaging keys are located in the second, third, fourth and fifth shift slots. But the engaging disk will not rotate and only the gear-shifting disk will rotate about 20 degrees. When changing from original neutral gear to first gear, the first-ratio engaging key will make the first-ratio slide sleeve move. This is the working state of auto-shifting. Therefore, the microprocessor can be used to choose optimum shift to maximize the engine effect.

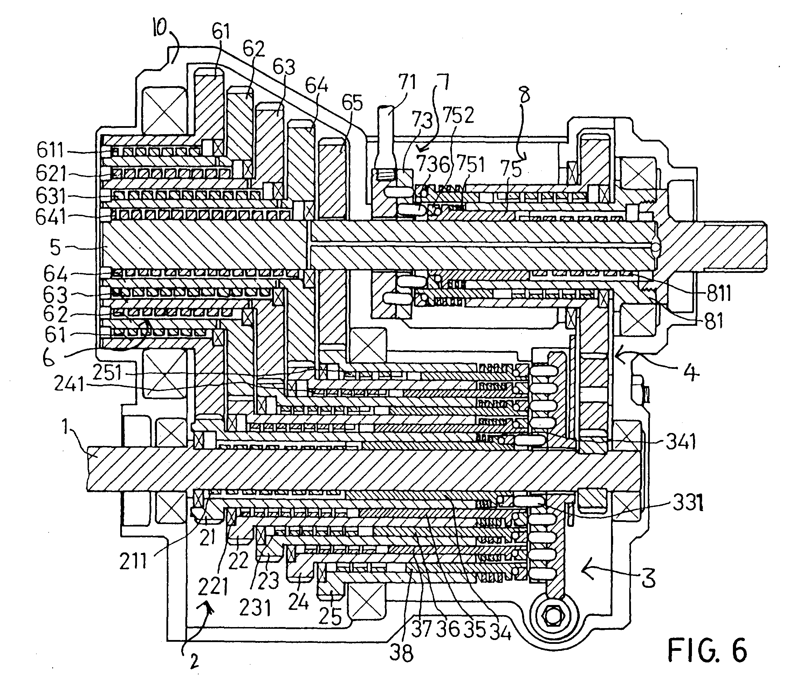

Fig. 6 shows the transmission in operation in first gear. The stepping motor 311 in Fig.5 has driven the threaded rod 31, making the gear-shifting disk 32 rotate through a certain angle to therefore make one end of the first-ratio engaging key 331 slide out of the first-ratio slot 321 of the gear-shifting disk 32 and make the other end thereof pressed towards the flange of the driving first-ratio slide sleeve 34 and make the flange of the driving first-ratio slide sleeve further pressed towards the driving first-ratio slide sleeve torque spring 341. The recess of the driving first-ratio slide sleeve at this time engages with the projecting end of the driving first-ratio spring 211, making the same closely fitted on the input shaft 1 and carried by the input shaft to rotate in the same direction at the same speed. Also, the driving first-ratio gear sleeve 21 engaging with the driving first-ratio spring 341 will rotate together therewith in the same direction. Since the driving first-ratio slide sleeve 34 is engaged with the projection and rotates in the same direction, therefore it will rotate at a speed identical to that of the input shaft 1, making the driving first-ratio gear sleeve 21 rotate at the same speed. Because the driving first-ratio gear sleeve 21 will make driven first-ratio gear sleeve 61 rotate in the reverse direction and one end of the driven first-ratio spring 611 engages with the driven first-ratio gear sleeve, therefore the driven first-ratio spring will be closely fitted on the driven second-ratio gear sleeve 62, making the driven first-ratio spring drive the driven second-ratio gear sleeve to rotate in the reverse direction and make the driven second-ratio spring 621 rotate in the reverse direction to be closely fitted on the driven third-ratio gear sleeve 63, making the driven third-ratio gear sleeve rotate in the reverse direction to drive the driven third-ratio spring 631 to reversely rotate to be closely twisted on the driven fourth-ratio gear sleeve 64, making the driven fourth-ratio gear sleeve rotate reversely to drive the driven fourth-ratio spring 641 to be twisted on the driven fifth-ratio gear 65, making the driven fifth-ratio gear rotate reversely. Finally, an engaging key of the driven fifth-ratio gear engages the driven shaft to drive the driven shaft to rotate in the reverse direction. However, a tooth number ratio exists between the driving gear set and driven gear set. Therefore, the speeds of the input shaft and the driven shaft can be identical or different. Since the driving and driven second-, third- and fourth-gear sleeves and the fifth-ratio gear mesh with each other, therefore the driven-ratio gear sleeve and gear can make the driving-ratio gear sleeve rotate. But the driving-ratio springs engaging with the driving-ratio gear sleeves are not twisted on the higher ratio gear sleeve. Therefore, the driving ratio gear sleeves rotate in same direction as the input shaft. But the driving ratio gear sleeves will rotate individually as an idling state which will not affect the rotation of the driving first-ratio gear sleeve and the driven gear set. The power will be sent from the driving first ratio to the driven first ratio and to the output shaft.

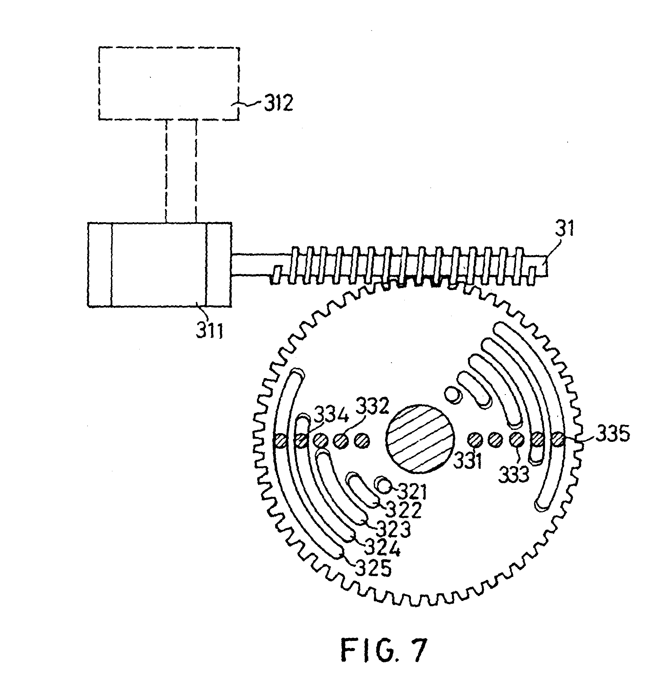

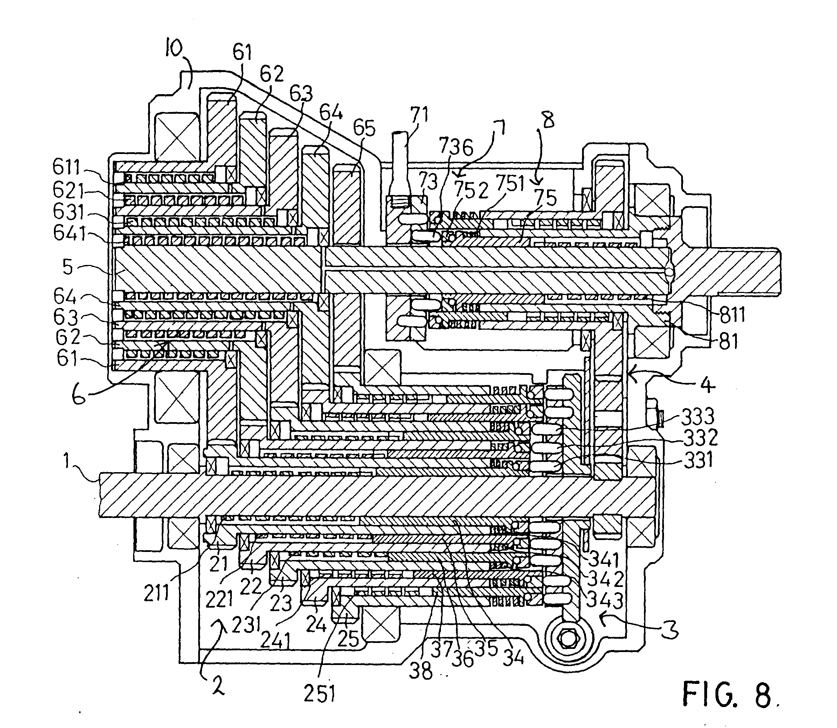

Fig. 7 shows the transmission operating in third gear. The stepping motor 311 drives the threaded rod 31, making the gear-shifting disk 32 rotate through another angle. At this time, the second engaging key 332 will slide out of the second-ratio slot 322 to form the second gear state. The threaded rod can further rotate through another angle from the second zone angle to the third zone angle. At this time, the third-ratio engaging key 333 will slide out of the third-ratio slot 323 to form the third gear state. At this position, the first-, second- and third-ratio engaging keys 331,332,333 all slide out of the first, second and third slots 321,322,323 as shown in Fig.8. Therefore, the three engaging keys engage with the flanges of the driving first-, second- and third-ratio slide sleeves 38,37,36 to make the driving first-, second- and third-ratio slide sleeve torque springs 381,371,361 forced and pressed and make the driving first-, second- and third-ratio slide sleeves pressed towards the driving first-, second- and third-ratio springs 211,221,231 and make the same respectively twisted on the surfaces of the input shaft 1, driving first-ratio gear sleeve 21 and driving second-ratio gear sleeve 22 so that the input shaft will drive all first-, second- and third-ratio gear sleeves 21,22,23 to rotate in the same direction at the same speed. However, since the driving second-ratio spring engages driving first-ratio gear sleeve and also experiences the rotating force of the driving first gear, therefore the driving second-ratio gear sleeve will have a rotating speed of the driving first-ratio gear sleeve in addition to the original input shaft speed. Thus, the driving third gear will have driving first-ratio gear sleeve rotating speed and driving second-ratio gear sleeve rotating speed in addition to the input shaft rotating speed. Since the teeth of the driving gear set mesh with the teeth of the driven gear set, thereby a rotating speed output from the driving third-ratio gear sleeve to the driven gear set is obtained to make the driven gear sleeves 61, 62,63 and 64 and driven gear 65 rotate reversely and the driven first-, second-, third- and fourth-ratio springs 611, 621,631,641 also respectively are twisted on the driven second-, third- and fourth-ratio gear sleeves and the driven shaft 5, and the driven fifth ratio gear is engaged with the driving shaft to make the rotating speed of the driven first- and second-ratio gear sleeves sent from the driving first- and second-ratio gear sleeves smaller than the rotating speed sent from the driving third-ratio gear sleeve towards the driven third-ratio gear sleeve. Therefore, only the driven third-ratio spring is closely forced on the driven fourth-ratio gear sleeve to make the driven fourth-ratio gear sleeve rotate, and because the driven fourth-ratio spring engaging with the driven fourth gear sleeve is closely forced on the driven fifth-ratio gear to make the same rotate and because the driven fifth ratio gear engages with the driven shaft, the driven shaft is driven to rotate at the speed of the driven third ratio. Because the driving fourth- and fifth-ratio springs are not closely twisted on the driving fourth- and fifth-ratio gear sleeves and because the fourth-and fifth-ratio engaging keys do not press down the driving fourth- and fifth-ratio slide sleeves to engage with the driving fourth- and fifth-ratio springs, therefore the driving fourth- and fifth-ratio gear sleeves will only drive the driving fourth- and fifth-ratio springs to rotate following the driven fourth and fifth ratios at a speed sent therefrom but will not actually drive to form an idling state. The second- and fourth-ratio transmission states are like the third-ratio state and will not be described in detail hereinafter. Of course a tooth number ratio exists between the driving third and the driven third ratio and thus the speed of the driven third ratio is different from that of driving third ratio.

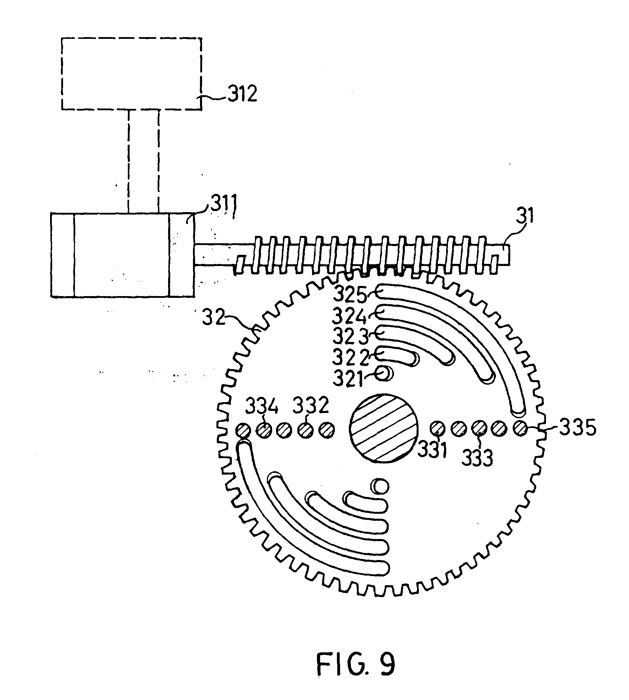

Fig.9 shows the transmission in operation in fifth gear, wherein the stepping motor 311 has driven the threaded rod 31, making the gear-shifting disk 32 further rotate through another angle to make five ratio-engaging keys 331, 332, 333,334,335 all slide out of the slots 321,322,323,324,325 of the gear-shifting disk 32.

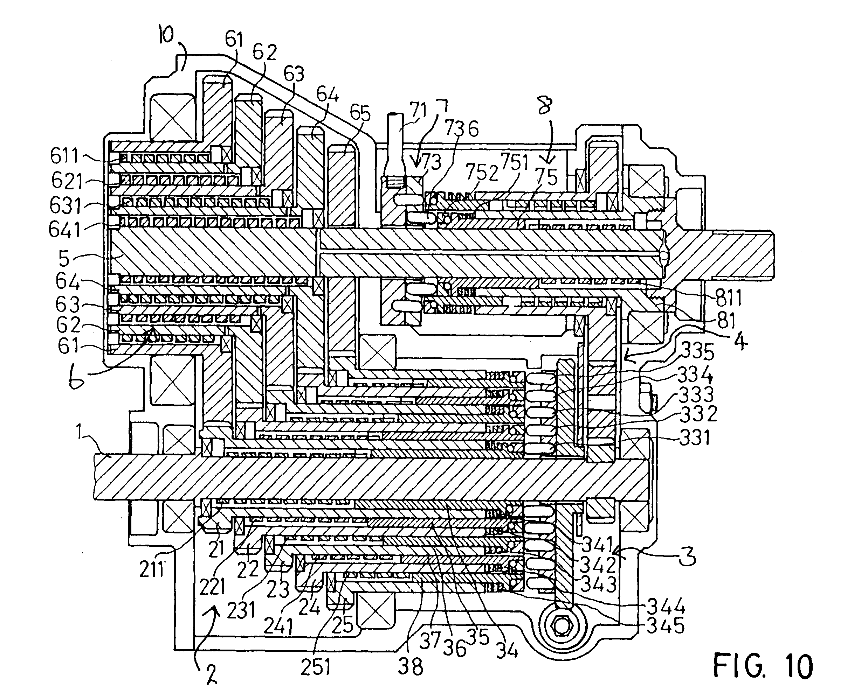

As shown in Fig.10, the five keys respectively move the driving first-, second-, third-, fourth- and fifth-ratio slide sleeves 38,37,36,35,34 making the driving first-, second-, third-, fourth- and fifth-ratio slide sleeve torque springs 381, 371, 361, 351, 341 pressed. At this time, the driving first-, second-, third-, fourth- and fifth-ratio slide sleeves 38,37,36,35, 34 are respectively fitted to the driving first-, second-, third-, fourth- and fifth-ratio springs 211,212,213,214,215, making the driving first-, second-, third-, fourth- and fifth-ratio gear sleeves 21,22,23,24,25 rotate following the input shaft 1 in the same direction. Because the rotating speeds of the driving ratio gear sleeves are different from one another, and since inside the driving fifth-ratio gear sleeve, the driving fifth-ratio spring is twisted on the driving fourth-ratio gear sleeve and the driving fourth-ratio spring is twisted on the driving third-ratio gear sleeve and at the same time, the driving third-ratio spring is also twisted on the driving second-ratio gear sleeve and the driving second-ratio spring is twisted on the driving first-ratio gear sleeve and the driving first-ratio gear sleeve is twisted on the input shaft, therefore of all the driving-ratio gear sleeves, the fifth-ratio gear sleeve has the fastest speed, the fourth one has the second-fastest speed, the third one has the third-fastest speed, the second one has the fourth-fastest speed and the first one has the slowest speed. The speeds of the input shaft and driving first- to fifth-ratio gear sleeves all are sent to the driven first- to fourth-ratio gear sleeves and the fifth gear according to the tooth-number ratio between the driving- and driven-ratio gear sleeves. Therefore, the driven fifth-ratio gear has the fastest speed and since the driven fifth-ratio gear is directly engaged with the driven shaft, thus it will transmit directly the speed to the driven shaft, and the speeds of the driven fourth, third, second and first ratios are gradually reduced. Thus, the driven fourth-, third-, second- and first-ratio, springs can-not be closely twisted on the driven fifth gear and the fourth-, third- and second-ratio gear sleeves to form an idling-like state without actual driving. This is the fifth-ratio transmission. The ratio can be increased or reduced according to the same principle.

According to the above description, when the accelerator is depressed and the power input from engine becomes larger and larger, the data sent from the detecting points to the microprocessor also becomes larger and larger, and the instruction sent from the microprocessor to the stepping motor also becomes quicker and quicker. Thus, the threaded rod will make the gear-shifting disk rotate through an angle and another angle, making the engaging keys one by one slide out of the slots to press driving ratio slide sleeves to engage with the driving shift springs, making the driving ratio gear sleeve driven by the input shaft rotate at different speeds which increase from first gear to fifth gear. Therefore, the rotating speed transmitted to the driven shaft also increases gradually and the rotating speed of the output shaft will thus increase gradually.

However, a common real road condition will not be so smooth and downward changes are necessary. Thereby, when the data sent to the microprocessor become small to indicate that the accelerator is free or the brake pedal is depressed and the speed is reduced, the microprocessor will output a signal to the stepping motor, making the same reversely rotate to drive the threaded rod, making the gear-shifting disk rotate reversely, making the engaging keys free from separating force and experience a restoring force. The engaging keys will no more press the driving ratio slide sleeves and the pressed driving ratio slide sleeve torque springs will extend to their original state. Also, the engaging keys will rebound into the slots of the gear-shifting disk, and the driving ratio slide sleeve will no more engage with the driving ratio springs and rebound to its original position, and the driving shift springs also no more be twisted on the driving shift gear sleeve or input shaft and will restore one ratio by one ratio to also make the driven ratio gear sleeves and gear rotate at gradually reduced speed ratio by ratio. Thus, the neutral state can be achieved. Or, the ratio position can be changed to the lower ratio and then raised to the higher ratio according to external conditions.

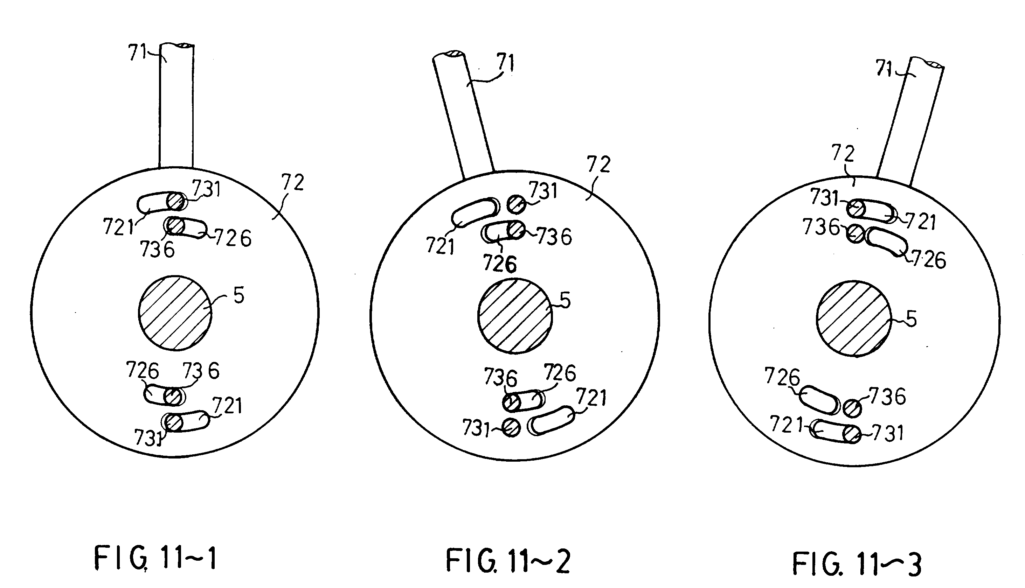

Fig.11-1 shows a sectional view of the forward/reverse/neutral control assembly 7, wherein the neutral condition is illustrated. The transmission is connected to an external manual control lever 71 which is connected to a shifting disk 72. The shifting disk 72 is fitted on the driven shaft 5. Two pairs of slots are respectively formed on upper and lower sides of the shifting disk 72. The outer one is a reverse gear slot 721. The upper reverse gear slot faces right and the lower one faces left. In the reverse gear slot is disposed a reverse gear engaging key 731. The size of the reverse gear slot is about two to three times that of the engaging key. The inner slot is forward gear slot 726 which is under the reverse gear slot 721. If the upper reverse gear slot 721 faces left, then the forward gear slot 726 faces right. Moreover, the slot 726 located under forward gear is formed above the reverse gear slot 721. If the lower reverse gear slot 721 faces right, then the forward gear slot 726 faces left. The size of each forward gear slot is also about two to three times that of the engaging key. When in neutral, the manual control lever and forward gear engaging key and reverse gear engaging key are aligned with one another, i.e., the forward gear and reverse gear engaging keys respectively are located in the forward gear and reverse gear slots. Fig. 11-2 shows the forward/reverse/neutral shift control assembly 7 in the reverse gear condition, wherein the manual control lever 71 is turned left through a certain angle, making the reverse gear engaging key 731 separate from the reverse gear slot 721 and the forward gear engaging key 736 remain in the forward gear slot 726 and only move from one end to the other end. Fig. 11-3 shows the control assembly 7 in the forward gear condition. At this time, the manual control lever 71 is turned right through a certain angle, making the forward gear engaging key 736 separate from the forward gear slot 726 and the reverse gear engaging key 731 remain in the reverse gear slot 721 and only move from one end to the other end. A control button can be used to control the stepping motor and threaded rod to drive the forward/reverse gear disk to move without using a manual shifting lever.

When under forward first, third and fifth ratio positions as shown in Figs. 6, 8, 10 and when the manual control lever is shifted to the forward gear position as shown in Fig. 11-3, the forward gear engaging key 731 slides out of the forward gear slot towards the forward gear slide sleeve 75 of the assembly 7, making the forward gear slide sleeve slide axially and making the recess thereof engage with the projecting portion of the forward gear spring 811, the rotating speeds of each ratio will be transmitted from the driven shaft. The forward gear spring twisted on the driven shaft will drive the forward gear sleeve to rotate at the same speed and in the same direction as the driven shaft. Since the forward gear sleeve is screwed on the output shaft, therefore the output shaft will output corresponding to the speed and direction of the driven shaft under each gear position. But the output shaft will rotate in a reverse direction of the rotating direction of the input shaft. Through the output shaft, the engine transmits power outwardly to move forwards. At this time, the reverse gear is located in outer layer and not twisted tightly and will not produce any effect.

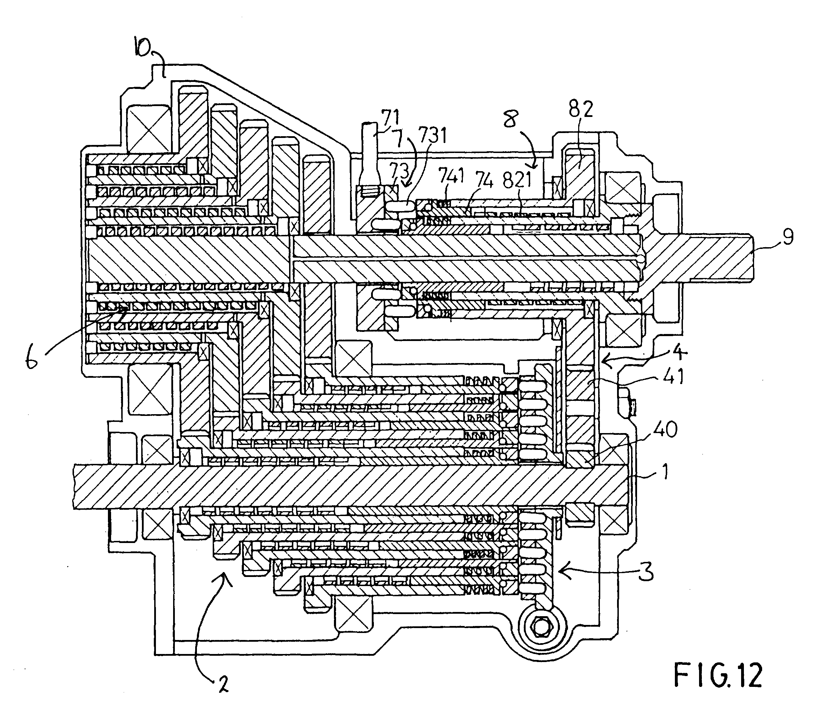

Fig. 12 shows the transmission in the reverse gear condition, wherein the manual control lever is shifted to the reverse position as shown in Fig. 11-2 and the reverse gear engaging key 736 slides out of the reverse gear slot to press the reverse gear slide sleeve 74 of assembly 7, making the reverse gear slide sleeve axially slide to press the reverse gear slide sleeve torque spring 741, making the recess of the reverse gear slide sleeve engage with the projecting portion of the reverse gear spring 821, making the reverse gear spring twist closely on the forward gear sleeve 75 to drive the forward gear sleeve to rotate, and since the forward gear sleeve is screwed on the output shaft, the output shaft is also driven to rotate. The power is obtained in such a manner that the teeth of the reverse gear sleeve mesh with the teeth of the idler gear 41 and the teeth of idler gear further mesh with the teeth of the reverse gear 40 fitted to the input shaft 1 so that the reverse gear sleeve rotates in same direction as the input shaft and the idler gear rotates in different direction from the input shaft. Therefore, the reverse gear sleeve rotates in same direction as the input shaft while the forward gear sleeve rotates in same direction as the input shaft and the power is transmitted from input shaft toward output shaft to produce a reversing effect. The differences between the aforesaid forward gear and this effect are the power transmitting path and direction and value. Therefore, the forward and reverse gears are both controlled by the manual control lever. When moving forwards, it will never reverse and when reversing, it will never advance to keep the driving smooth and safe.

The housing of this transmission is disposed according to each element. Because it pertains to totally meshing system and is supported by bearings to rotate, the elements all rotate at high speed during a long period, and heat is produced by frictional motion and a lubricating and cooling device is required. in the present invention, an oil pool is disposed under the housing and partial gears are immersed therein so that when rotating, a lubricating and cooling effect is obtained.

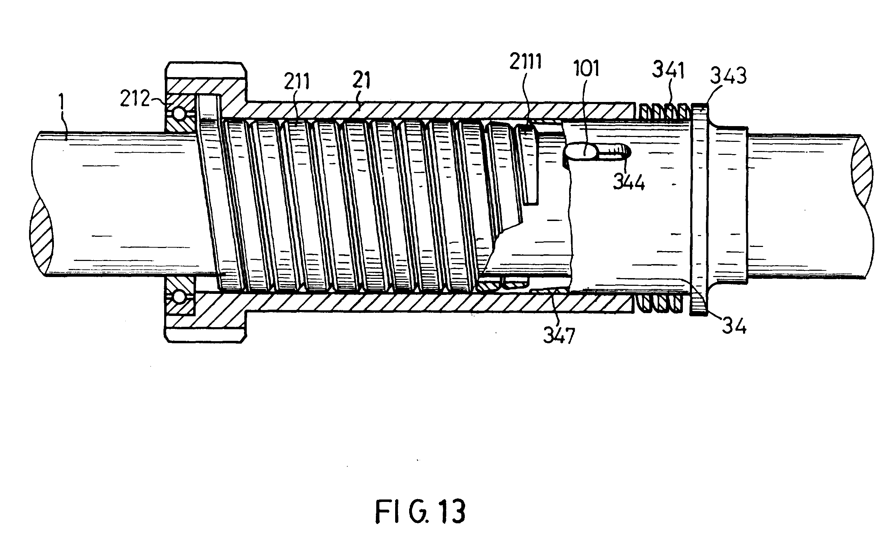

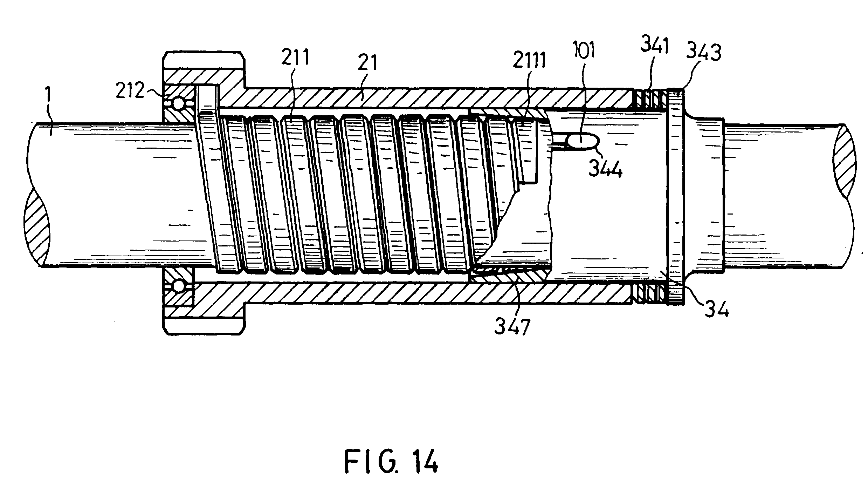

Fig. 13 shows another embodiment of input shaft portion of this invention. A gear sleeve 21 is fitted on the input shaft 1. The upper end of the gear sleeve 21 has a gear portion. The whole sleeve 21 is integrally made. The gear portion extends beyond the outer surface of the sleeve 21. On the inner surface of the gear sleeve 21 is disposed a bearing 212. The other end of the sleeve 21 engages with one end of a spring 211. The other end of the spring has a tapered portion 2111 with a reduced outer diameter. A projection 101 is formed on the input shaft and a slide sleeve 34 is fitted to the other end of the input shaft. The slide sleeve has a flange 343. A torque spring 341 is disposed between the flange and the gear sleeve end. A slot 344 is formed on the slide sleeve. The projection 10 is located at one end of the slot. In Fig. 13, the slide sleeve is not forced to slide towards the gear sleeve. In Fig. 14, the slide sleeve 34 is forced to slide towards the gear sleeve 21 and the torque spring 341 retracts and the projection 101 slides in the slot 344 from one end to the other end. At this time, since the projection 101 engages the slide sleeve and the input shaft rotates to drive the slide sleeve to rotate, when the slide sleeve slides towards the spring, it will engage the spring 211. The inner rear end of the slide sleeve has a tapered inner surface portion 347 which can more closely engage with the tapered portion 2111 of the spring, making the spring closely twisted on the input shaft to be driven to further rotationally drive the gear sleeve. When not forced, the slide sleeve will be urged to its original position by the torque spring. The spring will become loose and no longer drive. The outer several gear sleeves are all provided with the projections and same elements.

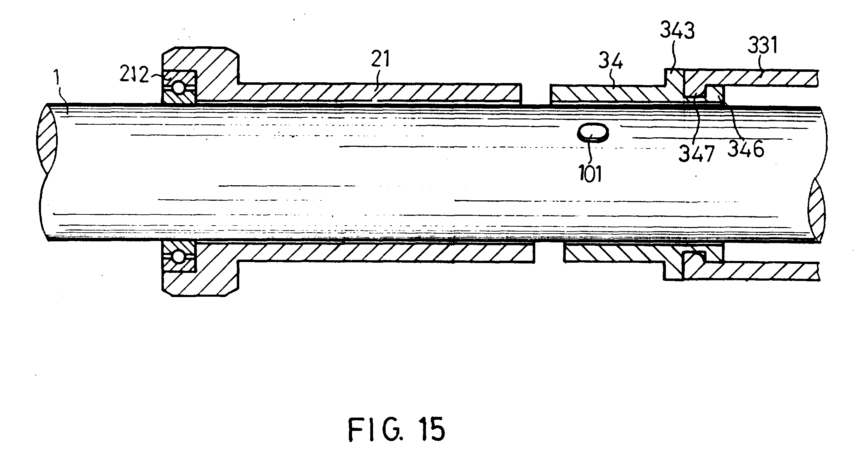

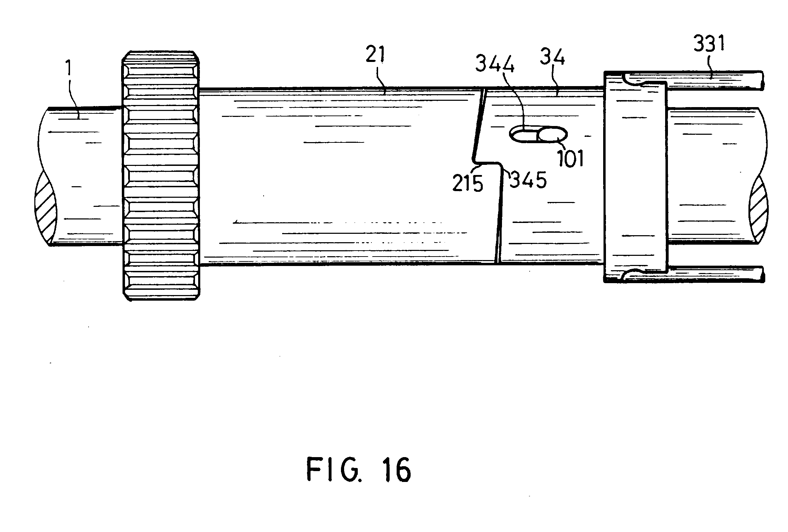

Figs. 15 and 16 show a further embodiment of the input shaft portion, wherein a gear sleeve 21 is fitted on the input shaft 1. The gear sleeve has a gear portion at its one end and is formed integrally. The gear portion extends beyond the outer surface of the gear sleeve. The gear sleeve is provided with a bearing 212 near its gear portion end and a recess 215 at its rear end. A slide sleeve 34 is fitted on the other end of the input shaft 1. The slide sleeve has a projecting portion 345 at its rear end and the input shaft ha a projection 101. A slot 344 is formed on the slide sleeve to receive the projection 101 at its one end. At other end of the slide sleeve are disposed two flanges 343, 346 between which a sleeve neck 347 is received. An engaging key projecting end 331 can be disposed in the sleeve neck of the slide sleeve to drive the slide sleeve. Fig. 15 shows that the slide sleeve is not engaged with the gear sleeve.

In Fig. 16, the projecting end 331 of the engaging key drives the slide sleeve to slide towards the gear sleeve, making the recess 215 of the gear sleeve engage with projecting portion 345 and the projection of input shaft slide towards the other end. At this time, the input shaft rotates to drive the slide sleeve 34 to rotate and further drive the gear sleeve 21 to rotate. When the projecting end 331 of engaging key is taken back, the slide sleeve slides back too. At this time, only the slide sleeve rotates and no driving effect is produced. The outer several layers are also provided with same elements.

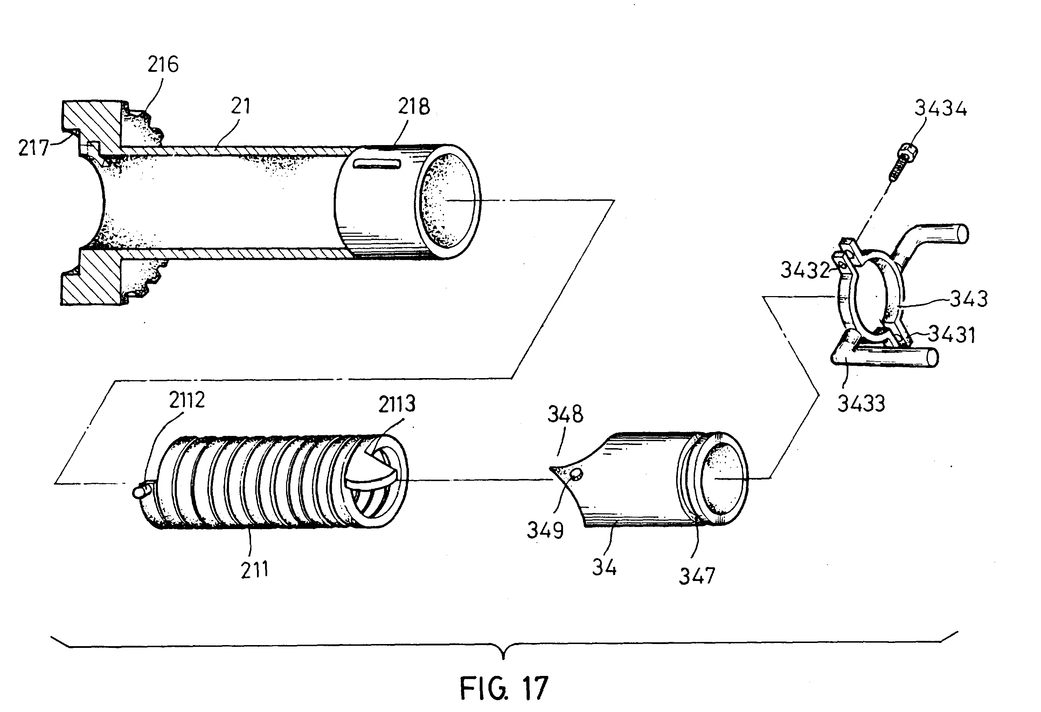

Fig. 17 shows another embodiment of the input shaft portion of this invention, wherein a gear sleeve 21 is fitted on the input shaft 1 and a spring 211 is disposed whereby, when the spring 211 is twisted, the inner diameter thereof is larger than the outer diameter of the input shaft so that it can be fitted on the input shaft. When the external torque disappears, the resistant restoring torque of the spring will reduce the inner diameter to closely engage with the input shaft. One end of the spring is formed with a triangular projection 2113 and one end of the gear sleeve 21 is integrally formed with a gear 216. The inner diameter of the gear sleeve is slightly larger than the outer diameters of the spring 211 and slide sleeve 34. A recess 217 is formed on inner surface near the gear end for a projecting end 2112 of the spring to engage with to restrict the spring so that the spring can only perform a screwing movement. Moreover, the slide sleeve 34 has a substantially triangular projecting end 348 at its one end and has a annular groove 347 receiving a ring member 343 which includes two semicircular members each having a projection 3431 formed with a hole 3432. A screw 3434 goes through the holes 3432 to rotatably fix the ring member 343 on the annular groove 347 of the slide sleeve 34. A projection 349 is suitable to be placed into a slot 218 of the gear sleeve 21. Each semicircular member has a projecting rod 3433 which is moved by the engaging key. A bearing 212 is further disposed at gear end of the gear sleeve.

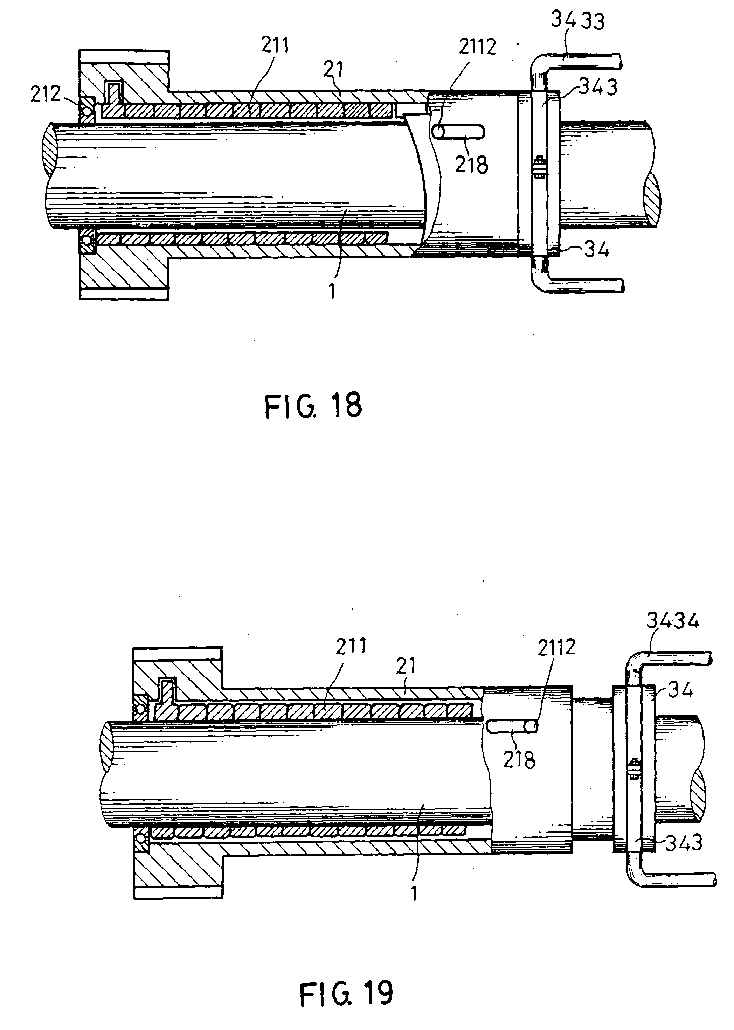

Fig. 18 shows that the ring member 343 is not moved by the engaging key and the triangular projecting end of the slide sleeve 34 engages with the triangular projecting end of the spring to abut against the spring, preventing the same from being twisted closely on the input shaft 1. At this position, the spring will not drive the gear sleeve 21 to rotate, and the projection of the slide sleeve 34 also engages with the slot 218 to prevent the slide sleeve from rotating. Fig. 19 shows that the ring member 343 is outwardly moved by the engaging key to drive the slide sleeve to move outwards, and the projecting end of the slide sleeve no longer engages with the projecting end of the spring. At this time, the projection of slide sleeve slides along the slot 218 of gear sleeve from one end toward the other end. At this position, the spring is free from torque and automatically screws tightly on the input shaft to be driven thereby, and since one end of the spring engages with the gear sleeve, the gear sleeve is also driven to rotate and since the slot of the gear sleeve engages with the projection of the slide sleeve, the slide sleeve is also driven to rotate. At this time, the gear sleeve outputs power outwardly. In this embodiment, the aforesaid gear-shifting disk of the forward gear control assembly operates in reverse directions. The stepping motor outputs power in a reverse direction, making the engaging key slide out of the shifting gear disk. When abutting against the ring member, it is in a neutral condition, and when the engaging key engages with the shifting disk, it is in forward gear, i.e. the original fifth-ratio effect is now neutral and the original fourth ratio is now first ratio and accordingly, the original neutral condition is now fifth ratio. The original forward and reverse gears are now reverse and forward gears. The driving gear set can accordingly form the assembly with several layers.

## Claims

1. A transmission comprising:
a housing (10), an input shaft (1) and an output shaft (9);
the input shaft having a front half portion and a rear half portion;
a driving gear assembly (2) having several driving gear sleeves (21, 22, 23, 24, 25) the number of which is equal to the number of gear ratios of the transmission, the driving gear sleeves having respective different diameters and being fitted on the front half portion of the input shaft in sequence from the smallest diameter one to the largest diameter one, each driving gear sleeve not being permanently rotatably driven by the input shaft;
a forward gear control assembly (3) having several slide sleeves (34, 35, 36, 37, 38) with different diameters, the number of which is equal to that of the gear ratios, the slide sleeves being fitted on the rear half portion of the input shaft in sequence from the smallest diameter one to the largest diameter one, a first control means being used to control the engagement and separation of the slide sleeves and corresponding driving gear sleeves to select the gear ratio, each slide sleeve being rotatably driven by the input shaft and being capable of engaging its corresponding driving gear sleeve to cause rotation thereof;
a reverse gear assembly (4) having a reversing gear (40) fitted on the rear end of the input shaft, the reversing gear engaging an idler gear (41);
a driven shaft (5) having a front portion, a middle portion and a rear portion;
a driven gear assembly (6) having several driven gear sleeves (61, 62, 63, 64) and a driven gear (65) the combined number of which is equal to the number of driving gear sleeves, the driven gear sleeves having respective different diameters and being fitted on the front portion of the driven shaft in sequence from the smallest diameter one to the largest diameter one and meshing with respective driving gear sleeves, each driven gear sleeve having a third coupling means (611, 621, 631, 641, 651) which connects the driven gear sleeves with one another and connects the driven gear sleeves with the driven shaft (5) whereby, when each driving gear sleeve rotates, the driven gear sleeve meshing therewith is driven to rotate and rotationally drives in inward sequence each driven gear sleeve and the driven shaft;
a forward/reverse gear assembly (8) having two sleeves (81, 82) with different diameters, the sleeves being fitted on the rear portion of the driven shaft in sequence from the smaller diameter one to the larger diameter one, one of the sleeves being a forward drive sleeve, the other of the sleeves being a reverse gear sleeve having a gear which meshes with the idler gear, each sleeve having a fourth coupling means which connects the driven shaft with each sleeve whereby the driven shaft or idler gear can rotationally drive each sleeve;
a forward/reverse/neutral control assembly (7) having two slide sleeves (74, 75) with different diameters, the slide sleeves being fitted on the middle portion of the driven shaft with the smaller diameter one within the larger diameter one, a second control means being used to control the separation and engagement of the slide sleeves (74, 75) and the forward/reverse sleeves (81, 82) to select forward or reverse or neutral gear, each slide sleeve (74, 75) rotationally driving a corresponding sleeve (81,82); and
the output shaft (9) being connected to the forward/reverse gear assembly.

2. A transmission according to claim 1, wherein the input shaft is connected to an outer control lever means and disposed in the housing (10) on one side thereof, each end of the input shaft extending into the housing and being connected to the housing by a respective bearing (11, 12), an oil inlet being disposed in the housing.

3. A transmission according to claim 1, wherein each driving gear sleeve (21, 22, 23, 24, 25) and driven gear sleeve (61, 62, 63, 64) has a sleeve portion and a gear portion being integrally formed, each gear portion extending outwardly beyond the outer surface of the respective sleeve portion, the gear portions being arranged in sequence and, at the gear end of each gear sleeve, an inner bearing (212, 222, 232, 242, 252, 612, 622, 632, 642) having an oil inlet being provided.

4. A transmission according to claim 3, wherein the gear portions of the driving gear sleeves mesh with the gear portions of the driven gear sleeves in such a manner that the innermost driving gear sleeve (21) meshes with the outermost driven gear sleeve (61), the second innermost driving gear sleeve (22) meshes with the second outermost driven gear sleeve (62), the second outermost driving gear sleeve (24) meshes with the second innermost driven gear sleeve (64) and the outermost driving gear sleeve (25) meshes with the innermost driven gear (65), and the intermediate gear sleeves mesh in a corresponding manner.

5. A transmission according to claim 1, wherein each driving gear sleeve (21, 22, 23, 24, 25) is provided with a first coupling means so that the input shaft can rotationally drive the neighbouring driving gear sleeve (21) and further driving gear sleeves.

6. A transmission according to claim 1, wherein each driven gear sleeve (61, 62, 63, 64) is provided internally with the third coupling means which is a respective spring (611, 621, 631, 641), one end of each spring being engaged in a slot formed near the gear portion of the respective driven gear sleeve and the axially opposite end of each spring extending outwardly whereby the driven gear sleeve can be rotationally driven by rotation of the corresponding driving gear sleeve, making the spring inside the driven gear sleeve tighten on the inwardly-neighbouring driven gear sleeve to rotationally drive the same and, accordingly, the further inner driven gear sleeves are driven in sequence, and when not driven, the spring fits loosely with a clearance on the inner driven gear sleeve.

7. A transmission according to claim 1, wherein each slide sleeve (34, 35, 36, 37, 38) of the forward gear control assembly is provided internally with a second coupling means and the inner surface of one end of each slide sleeve is provided with a bearing formed with an oil inlet.

8. A transmission according to claim 6, wherein the third coupling means for the innermost driven gear (65) is a key (651) located inside the innermost driven gear (65) so that the latter is engaged with the driven shaft by the key so that the innermost driven gear sleeve can directly rotationally drive the driven shaft.

9. A transmission according to claim 1, wherein each driven gear sleeve (61, 62, 63, 64) is provided with a bearing (613, 623, 633, 643) near one end of its sleeve portion to engage with the outer surface of the inwardly-neighbouring driven gear sleeve, the driven gear sleeves being connected to the housing by a bearing (51), each bearing being formed with an oil inlet.

10. A transmission according to claim 5, wherein the first coupling means inside each driving gear sleeve (21, 22, 23, 24, 25) comprises a spring (211, 221, 231, 241, 251), one end of each spring being engaged in a slot (213) formed in the corresponding driving gear sleeve near the gear portion, the other end of each spring extending axially outside the gear sleeve whereby, when not driven, a clearance exists between each spring and the inwardly-neighbouring driving gear sleeve or input shaft and, when driven, the spring is closely tightened on the inwardly-neighbouring driving gear sleeve so that the input shaft or neighbouring driving gear sleeve can rotationally drive the adjacent driving gear sleeve.

11. A transmission according to claim 5, wherein the first coupling means inside each driving gear sleeve (21, 22, 23, 24, 25) comprises a spring (211, 221, 231, 241, 251) one end of which is engaged in a slot (213) formed in the corresponding driving gear sleeve near the gear portion and the other end (2111) of which is tapered whereby, when not driven, a clearance exists between the spring and the inwardly-neighbouring driving gear sleeve or input shaft.

12. A transmission according to claim 10, wherein the other end of each spring (211) has a recess or projection portion (215) whereby, when driven, the recess or projection portion is engaged with a projection portion (345) or recess of the corresponding slide sleeve for rotational driving.

13. A transmission according to claim 5, wherein the first coupling means inside each driving gear sleeve comprises a spring (211,221,231,241,251) the inner diameter of which is smaller than the outer diameter of the inwardly-neighbouring driving gear sleeve or input shaft to be sleeved, whereby when the spring is twisted, it can be fitted thereon, one end (2112) of the spring being engaged with a slot formed on the driving gear sleeve near the gear portion, the other end of the spring having a triangular projecting end (2113), a clearance existing between the spring and the inner surface of the outwardly neighbouring driving gear sleeve.

14. A transmission according to claim 7, wherein the second coupling means for the innermost slide sleeve (34) comprises a projection (101; 349) formed on a predetermined portion of the input shaft to engage with a slot (344; 218) formed in the innermost slide sleeve of the forward gear control assembly whereby the input shaft can rotationally drive the slide sleeve.

15. A transmission according to claim 7, wherein the second coupling means comprises a projection (349) disposed on a predetermined portion of each slide sleeve (34) of the forward gear control assembly, the projection being suitable to engage a slot (344) formed on the neighbouring outer slide sleeve whereby the inner slide sleeve can rotationally drive the outwardly-neighbouring slide sleeve.

16. A transmission according to claim 7, wherein the second coupling means comprises a flange (343) disposed on each slide sleeve and a respective torque spring (341,351,361,371) is disposed between the flange and one end of corresponding driving gear sleeve so that, when the slide sleeve is not driven, it will be urged by the torque spring.

17. A transmission according to claims 7 and 13, wherein the second coupling means comprises a triangular projecting end (348) formed at one end of each slide sleeve (34,35,36,37,38), which is suitable to engage the triangular projecting end (2113) of the spring of the first coupling means of the driving gear sleeve (21), the projecting end (348) of the coupling means being formed with a projection (349) suitable to engage a slot (218) formed in the driving gear sleeve, an annular groove (347) being formed at other end of the slide sleeve, in the annular groove being disposed a ring member formed by two semicircular members (343) each of which has two projecting ends (3431) each formed with a hole (3432), a screw (3434) and a nut being used to go through the holes to fix the ring member in the annular groove of the slide sleeve, each semicircular member having a projection (3433) connected with one end of the first control means to be moved by the forward gear control assembly whereby, when the slide sleeve is driven, it will engage the projecting end of the spring, making the spring not be tightened closely on the inwardly-neighbouring driving gear sleeve to prevent driving and, conversely, when the slide sleeve is pulled back, the spring is tightened closely to drive outer driving gear sleeve.

18. A transmission according to claim 1, wherein the first control means of the forward gear control assembly includes:
a microprocessor (312) capable of managing data sent from several detecting means disposed at predetermined positions and outputting action commands after analysis;
a stepping motor (311) accepting commands sent from the microprocessor and outputting power according to the commands;
a threaded rod (31) driven by the motor to make the forward gear control assembly change the gear position;
a ratio-shifting disk (32) having several pairs of shifting slots (321, 322, 323, 324, 325) the number of which is equal to that of the ratios, the slots being radially disposed in such a manner that the inner slot (321) is shorter and the outer slot (325) is larger and all the slots are aligned with one another and symmetrically disposed on two sides of the centre of the disk, the periphery of the gear disk being formed with gear teeth meshing with the thread of the threaded rod to be driven by the threaded rod, the ratio disk further engaging the input shaft (1);
an engaging disk (33) engaging the ratio-shifting disk and the input shaft (1), several pairs of engaging slots being formed in the engaging disk symmetrically on two sides thereof; and
several pairs of engaging keys (331, 332, 333, 334, 335) suitable for engagement with the slots of the ratio-shifting disk and the slots of the engaging disk whereby, when the ratio-shifting disk rotates, the engaging keys can slide out of or engage with the shifting slots in sequence and engage at their opposite projecting ends to make corresponding slide sleeves engage with or separate from one another, allowing the power of input shaft to be outwardly transmitted from driving gear set.

19. A transmission according to claim 1, wherein the reverse gear of the forward/reverse gear assembly (8) is engaged with the rear half portion of the input shaft (1) by a key and the idler gear (41) is rotatably fixed in the housing (10) by a mounting shaft which (43) is in parallel to the input shaft and fixed in the housing.

20. A transmission according to claim 1, wherein the driven shaft (5) is disposed on the other side of the housing to the input shaft (1), one end of the driven shaft is connected to a bearing (642), an oil passage being formed in the driven shaft, which goes to the oil inlet of the bearing, a clearance existing between the driven shaft and the output shaft (9).

21. A transmission according to claim 1, wherein the second control means of the forward/reverse/neutral shift control assembly includes a manual operating lever (71) extending into the housing, the lever connecting to a shifting disk (72) which is formed with two pairs of shifting slots (721, 726) radially symmetrically disposed on two sides of the centre of the shifting disk, the shifting disk and an engaging disk (73) both being fitted on the middle portion of the driven shaft (5), two pairs of engaging slots being radially symmetrically disposed on two sides of the centre of the engaging disk and two pairs of engaging keys (731, 736) being capable of sliding within the engaging slots and shifting slots whereby the manual operating lever can be used to control forward, neutral and reverse gear position.

22. A transmission according to claim 1, wherein each slide sleeve (74, 75) of the forward/reverse/neutral control assembly has a flange and a torque spring (741, 751) is disposed between the flange and rear end of the corresponding gear sleeve whereby, when the second control means shifts to neutral, the engaging key will not be moved and, when shifting to forward gear, only the inner engaging key slides out to move the flange of the inner slide sleeve (75), making the slide sleeve slide and engage with the forward drive sleeve for driving and, when shifting to reverse gear, only the outer engaging key slides out to move the flange of the outer slide sleeve (74), making the slide sleeve slide and engage with the reverse sleeve gear for driving, and the respective torque springs (741, 751) are used to urge each slide sleeve and engaging key when shifting, the flange end of each slide sleeve being provided with a bearing formed with an oil inlet.

23. A transmission according to claim 1, wherein the inner sleeve of the forward/reverse gear assembly is the forward drive sleeve screwed on the output shaft (9), and the outer sleeve is the reverse gear sleeve (82) meshing with the idler gear (41) and, when in neutral, neither of the inner and outer sleeves are driven.

24. A transmission according to claim 1, wherein the fourth coupling means comprises a respective spring (741, 751) for the inner and the outer sleeves (81, 82), one end of each spring engaging in a recess formed at one end of the respective sleeve on an inner surface thereof, the other end of each spring axially extending out whereby, when in forward gear, the extended end of the spring inside the inner sleeve engages with a recess in inner slide sleeve and is tightened closely on the driven shaft to rotationally drive the inner sleeve and to further rotationally drive the output shaft and, when in reverse gear, the extended end of the spring inside the outer sleeve engages in a recess in the outer slide sleeve and is tightened closely on the inner sleeve, making the outer sleeve through the idler gear rotationally drive the output shaft, making the output shaft output power outwardly.

25. A transmission according to claim 1, wherein each sleeve (81, 82) of the forward/reverse gear assembly is connected to a bearing (822) located on its inner surface at the gear end of the reverse gear sleeve, and is further connected to a bearing (823) located on the outer surface thereof and fixed in the housing, each bearing being formed with an oil inlet.

26. A transmission according to claim 1, wherein an oil-storing means is disposed at the bottom of the housing to lubricate the aforesaid elements and oil passages are formed to communicate the oil-storing means with each element.

## Patentansprüche

1. Getriebe, das folgendes umfaßt: ein Gehäuse (10), eine Antriebswelle (1) und eine Abtriebswelle (9), wobei die Antriebswelle einen vorderen Abschnitt und einen hinteren Abschnitt hat; eine Antriebsradbaugruppe (2) mit mehreren Antriebsradmuffen (21, 22, 23, 24, 25), deren Anzahl gleich der Anzahl von Übersetzungen des Getriebes ist, wobei die Antriebsradmuffen entsprechende unterschiedliche Durchmesser haben und am vorderen Abschnitt der Antriebswelle der Reihe nach von der mit dem kleinsten Durchmesser bis zu der mit dem größten Durchmesser angebracht sind, wobei jede Antriebsradmuffe von der Antriebswelle nicht dauernd rotationsmäßig angetrieben wird; eine Vorwärtsgangschaltbaugruppe (3) mit mehreren Schiebemuffen (34, 35, 36, 37, 38) mit unterschiedlichem Durchmesser, deren Anzahl gleich der der Übersetzungen ist, wobei die Schiebemuffen der Reihe nach von der mit dem kleinsten Durchmesser bis zu der mit dem größten Durchmesser am hinteren Abschnitt der Antriebswelle angebracht sind, wobei eine erste Steuereinrichtung zum Steuern von Eingriff und Trennen der Schiebemuffen und entsprechender Antriebsradmuffen zum Auswählen der Übersetzungen verwendet wird, wobei jede Schiebemuffe von der Antriebswelle rotationsmäßig angetrieben wird und mit ihrer entsprechenden Antriebsradmuffe in Eingriff kommen kann, um deren Drehung zu bewirken; eine Rückwärtsgangbaugruppe (4) mit einem am hinteren Ende der Antriebswelle angebrachten Rückwärtsgang (40), wobei der Rückwärtsgang mit einem Zwischenrad (41) in Eingriff ist; eine getriebene Welle (5) mit einem vorderen Abschnitt, einem mittleren Abschnitt und einem hinteren Abschnitt; eine getriebene Zahnradbaugruppe (6) mit mehreren getriebenen Zahnradmuffen (61, 62, 63, 64) und einem getriebenen Rad (65), deren gemeinsame Anzahl gleich der Anzahl von Antriebsradmuffen ist, wobei die getriebenen Zahnradmuffen entsprechende unterschiedliche Durchmesser haben und am vorderen Abschnitt der getriebenen Welle der Reihe nach von der mit dem kleinsten Durchmesser bis zu der mit dem größten Durchmesser angebracht sind und mit entsprechenden Antriebsradmuffen in Eingriff sind, wobei jede getriebene Zahnradmuffe eine dritte Kupplungseinrichtung (611, 621, 631, 641, 651) hat, welche die getriebenen Zahnradmuffen miteinander verbindet und die getriebenen Zahnradmuffen mit der getriebenen Welle (5) verbindet, wodurch, wenn sich jede Antriebsradmuffe dreht, die damit in Eingriff befindliche getriebene Zahnradmuffe zum Drehen angetrieben wird und in nach innen gerichteter Reihenfolge jede getriebene Zahnradmuffe und die getriebene Welle rotationsmäßig antreibt; eine Vorwärtsgang-/Rückwärtsgangbaugruppe (8) mit zwei Muffen (81, 82) mit unterschiedlichem Durchmesser, wobei die Muffen der Reihe nach von der mit dem kleineren Durchmesser bis zu der mit dem größeren Durchmesser am hinteren Abschnitt der getriebenen Welle angebracht sind, wobei eine der Muffen eine Vorwärtsgangmuffe ist, wobei die andere der Muffen eine Rückwärtsgangmuffe ist mit einem Zahnrad, das mit dem Zwischenrad in Eingriff ist, wobei jede Muffe eine vierte Kupplungseinrichtung hat, welche die getriebene Welle mit jeder Muffe verbindet, wodurch die getriebene Welle oder das Zwischenrad jede Muffe rotationsmäßig antreiben kann; eine Vorwärtsgang-/Rückwärtsgang-/Leerlaufschaltbaugruppe (7) mit zwei Schiebemuffen (74, 75) mit unterschiedlichem Durchmesser, wobei die Schiebemuffen mit der mit dem kleineren Durchmesser in der mit dem größeren Durchmesser am mittleren Abschnitt der getriebenen Welle angebracht sind, wobei eine zweite Steuereinrichtung zum Steuern von Trennen und Eingriff der Schiebemuffen (74, 75) und der Vorwärtsgang-/Rückwärtsgangmuffen (81, 82) zum Wählen von Vorwärts- oder Rückwärtsgang oder Leerlauf verwendet wird, wobei jede Schiebemuffe (74, 75) eine entsprechende Muffe (81, 82) rotationsmäßig antreibt, und wobei die Abtriebswelle (9) mit der Vorwärtsgang/Rückwärtsgangbaugruppe verbunden ist.

2. Getriebe nach Anspruch 1, wobei die Antriebswelle mit einer äußeren Schalthebeleinrichtung verbunden ist und im Gehäuse (10) auf einer Seite davon angeordnet ist, wobei sich jedes Ende der Antriebswelle in das Gehäuse erstreckt und durch ein betreffendes Lager (11, 12) mit dem Gehäuse verbunden ist, wobei im Gehäuse ein Öleinlaß angeordnet ist.

3. Getriebe nach Anspruch 1, wobei jede Antriebsradmuffe (21, 22, 23, 24, 25) und getriebene Zahnradmuffe (61, 62, 63, 64) einen Muffenabschnitt und einen Zahnradabschnitt hat, die angeformt sind, wobei sich jeder Zahnradabschnitt nach außen über die äußere Oberfläche des betreffenden Muffenabschnitts hinaus erstreckt, wobei die Zahnradabschnitte sequentiell angeordnet sind, und am Zahnradende jeder Zahnradmuffe ein inneres Lager (212, 222, 232, 242, 252, 612, 622, 632, 642) mit einem Öleinlaß vorgesehen ist.

4. Getriebe nach Anspruch 3, wobei die Zahnradabschnitte der Antriebsradmuffen mit den Zahnradabschnitten der getriebenen Zahnradmuffen so in Eingriff sind, daß die innerste Antriebsradmuffe (21) mit der äußersten getriebenen Zahnradmuffe (61) in Eingriff ist, die zweitinnerste Antriebsradmuffe (22) mit der zweitäußersten getriebenen Zahnradmuffe (62) in Eingriff ist, die zweitäußerste Antriebsradmuffe (24) mit der zweitinnersten getriebenen Zahnradmuffe (64) in Eingriff ist und die äußerste Antriebsradmuffe (25) mit dem innersten getriebenen Zahnrad (65) in Eingriff ist und die mittleren Zahnradmuffen in entsprechender Weise in Eingriff sind.

5. Getriebe nach Anspruch 1, wobei jede Antriebsradmuffe (21, 22, 23, 24, 25) mit einer ersten Kupplungseinrichtung versehen ist, so daß die Antriebswelle die benachbarte Antriebsradmuffe (21) und weitere Antriebsradmuffen rotationsmäßig antreiben kann.

6. Getriebe nach Anspruch 1, wobei jede getriebene Zahnradmuffe (61, 62, 63, 64) innerlich mit der dritten Kupplungseinrichtung versehen ist, welche eine betreffende Feder (611, 621, 631, 641) ist, wobei ein Ende jeder Feder in einen in der Nähe des Zahnradabschnitts der betreffenden getriebenen Zahnradmuffe eingeformten Schlitz eingreift und das axial entgegengesetzte Ende jeder Feder sich nach außen erstreckt, wodurch die getriebene Zahnradmuffe durch Drehen der entsprechenden Antriebsradmuffe rotationsmäßig angetrieben werden kann, was bewirkt, daß sich die Feder in der getriebene Zahnradmuffe auf der nach innen benachbarten getriebenen Zahnradmuffe festzieht, um diese rotationsmäßig anzutreiben, und die weiteren inneren getriebenen Zahnradmuffen dementsprechend sequentiell angetrieben werden, und die Feder, wenn sie nicht angetrieben wird, mit einem Zwischenraum lose auf der inneren getriebenen Zahnradmuffe sitzt.

7. Getriebe nach Anspruch 1, wobei jede Schiebemuffe (34, 35, 36, 37, 38) der Vorwärtsgangschaltbaugruppe innerlich mit einer zweiten Kupplungsvorrichtung versehen ist und die innere Oberfläche eines Endes jeder Schiebemuffe mit einem Lager mit einem angeformten Öleinlaß versehen ist.

8. Getriebe nach Anspruch 6, wobei die dritte Kupplungseinrichtung für das innerste getriebene Zahnrad (65) ein Keil (651) ist, der sich im innersten getriebenen Zahnrad (65) befindet, so daß letzteres durch den Keil mit der getriebenen Welle in Eingriff ist, so daß die innerste getriebene Zahnradmuffe die getriebene Welle direkt rotationsmäßig antreiben kann.

9. Getriebe nach Anspruch 1, wobei jede getriebene Zahnradmuffe (61, 62, 63, 64) in der Nähe von einem Ende ihres Muffenabschnitts mit einem Lager (613, 623, 633, 643) versehen ist, um mit der äußeren Oberfläche der nach innen benachbarten getriebenen Zahnradmuffe in Eingriff zu sein, wobei die getriebenen Zahnradmuffen durch ein Lager (51) mit dem Gehäuse verbunden sind, wobei jedes Lager mit einem Öleinlaß geformt ist.

10. Getriebe nach Anspruch 5, wobei die erste Kupplungseinrichtung in jeder Antriebsradmuffe (21, 22, 23, 24, 25) eine Feder (211, 221, 231, 241, 251) aufweist, wobei ein Ende jeder Feder in einen in der entsprechenden Antriebsradmuffe in der Nähe des Zahnradabschnitts eingeformten Schlitz (213) eingreift, wobei sich das andere Ende jeder Feder axial außerhalb der Zahnradmuffe erstreckt, wodurch, wenn sie nicht angetrieben wird, zwischen jeder Feder und der nach innen benachbarten Antriebsradmuffe oder Antriebswelle ein Zwischenraum besteht und, wenn sie angetrieben wird, die Feder auf der nach innen benachbarten Antriebsradmuffe eng festgezogen ist, so daß die Antriebswelle oder die benachbarte Antriebsradmuffe die ..* Antriebsradmuffe rotationsmäßig antreiben kann.

11. Getriebe nach Anspruch 5, wobei die erste Kupplungseinrichtung in jeder Antriebsradmuffe (21, 22, 23, 24, 25) eine Feder (211, 221, 231, 241, 251) aufweist, deren eines Ende in einen Schlitz (213) eingreift, der in der Nähe des Zahnradabschnitts in der entsprechenden Antriebsradmuffe eingeformt ist, und deren anderes Ende (2111) verjüngt ist, wodurch, wenn sie nicht angetrieben wird, zwischen der Feder und der nach innen benachbarten Antriebsradmuffe oder Antriebswelle ein Zwischenraum besteht.

12. Getriebe nach Anspruch 10, wobei das andere Ende jeder Feder (211) eine Aussparung oder einen vorstehenden Teil (215) hat, wodurch, wenn getrieben, die Aussparung oder der vorstehende Teil zum rotationsmäßigen Antreiben mit einem vorstehenden Abschnitt (345) oder einer Aussparung der entsprechenden Schiebemuffe in Eingriff ist.

13. Getriebe nach Anspruch 5, wobei die erste Kupplungseinrichtung in jeder Antriebsradmuffe eine Feder (211, 221, 231, 241, 251) aufweist, deren Innendurchmesser kleiner ist als der Außendurchmesser der zu umgebenden, nach innen benachbarten Antriebsradmuffe oder Antriebswelle ist, wodurch die Feder, wenn sie gewunden ist, daran angebracht werden kann, wobei ein Ende (2112) der Feder mit einem in der Nähe des Zahnradabschnitts in die Antriebsradmuffe eingeformten Schlitz in Eingriff ist, wobei das andere Ende der Feder ein dreieckiges vorstehendes Ende (2113) hat, wobei zwischen der Feder und der inneren Oberfläche der ..** Antriebszahnradmuffe ein Zwischenraum besteht.

14. Getriebe nach Anspruch 7, wobei die zweite Kupplungseinrichtung für die innerste Schiebemuffe (34) eine an einem vorbestimmten Abschnitt der Antriebswelle geformte Nase (101; 349) aufweist zum Eingreifen in einen Schlitz (344; 218), der in der innersten Schiebemuffe der Vorwärtsgangschaltbaugruppe eingeformt ist, wodurch die Antriebswelle die Schiebemuffe rotationsmäßig antreiben kann.

15. Getriebe nach Anspruch 7, wobei die zweite Kupplungseinrichtung eine Nase (349) aufweist, die an einem vorbestimmten Abschnitt jeder Schiebemuffe (34) der Vorwärtsgangschaltbaugruppe angeordnet ist, wobei die Nase geeignet ist, um in einen in die benachbarte äußere Schiebemuffe eingeformten Schlitz (344) einzugreifen, wodurch die innere Schiebemuffe die nach außen benachbarte Schiebemuffe rotationsmäßig antreiben kann.

16. Getriebe nach Anspruch 7, wobei die zweite Kupplungseinrichtung einen Flansch (343) aufweist, der an jeder Schiebemuffe angeordnet ist, und eine betreffende Drehfeder (341, ..***) zwischen dem Flansch und einem Ende der entsprechenden Antriebsradmuffe angeordnet ist, so daß die Schiebemuffe, wenn sie nicht angetrieben wird, von der Drehfeder vorgedrückt wird.

17. Getriebe nach Anspruch 7 und Anspruch 13, wobei die zweite Kupplungseinrichtung ein dreieckiges vorstehendes Ende (348) aufweist, das an einem Ende jeder Schiebemuffe (34, 35, 36, 37, 38) geformt ist, welches geeignet ist, um mit dem dreieckigen vorstehenden Ende (2113) der Feder der ersten Kupplungseinrichtung der Antriebsradmuffe (21) in Eingriff zu sein, wobei das vorstehende Ende (348) der Kupplungseinrichtung mit einer Nase (349) ausgeformt ist, die zum Eingreifen in einen in die Antriebsradmuffe eingeformten Schlitz (218) geeignet ist, wobei am anderen Ende der Schiebemuffe eine ringförmige Nut (347) geformt ist, wobei in der ringförmigen Nut ein Ringelement angeordnet ist, das aus zwei halbkreisförmigen Elementen (343) geformt ist, von denen jedes zwei vorstehende Enden (3431) hat, in die jeweils ein Loch (3432) eingeformt ist, wobei eine Schraube (3434) und eine Mutter verwendet werden, um das Ringelement durch die Löcher in der ringförmigen Nut der Schiebemuffe zu befestigen, wobei jedes halbkreisförmige Element einen Vorsprung (3433) hat, der mit einem Ende der ersten Steuereinrichtung verbunden ist, um von der Vorwärtsgangschaltbaugruppe bewegt zu werden, wodurch die Schiebemuffe, wenn sie angetrieben wird, mit dem vorstehenden Ende der Feder in Eingriff kommt, was bewirkt, daß die Feder auf der nach innen benachbarten Antriebsradmuffe nicht eng festgezogen wird, um ein Antreiben zu verhindern, und umgekehrt die Feder, wenn die Schiebemuffe zurückgezogen wird, eng festgezogen wird, um die äußere Antriebsradmuffe anzutreiben.

18. Getriebe nach Anspruch 1, wobei die erste Steuereinrichtung der Vorwärtsgangsteuereinrichtung folgendes aufweist: einen Mikroprozessor (312), der von verschiedenen, an vorbestimmten Positionen angeordneten Erfassungsvorrichtungen gesendete Daten verwalten und nach der Analyse Aktionsbefehle ausgeben kann; einen Schrittschaltmotor (311), der vom Mikroprozessor gesendete Befehle annimmt und den Befehlen entsprechend Kraft ausgibt; eine vom Motor angetriebene Schraubenspindel (31) zum Bewirken der Änderung der Gangstellung durch die Vorwärtsgangschaltbaugruppe; eine Gangschaltscheibe (32) mit mehreren Schaltschlitzpaaren (321, 322, 323, 324, 325), deren Anzahl gleich der der Übersetzungen ist, wobei die Schlitze radial so angeordnet sind, daß der innere Schlitz (321) kürzer und der äußere Schlitz (325) größer ist und alle Schlitze aufeinander ausgerichtet und auf zwei Seiten von der Mitte der Scheibe symmetrisch angeordnet sind, wobei der Rand der Schaltscheibe mit einer Getriebeverzahnung ausgeformt ist, die mit dem Gewinde der Schraubenspindel in Eingriff ist, um von der Schraubenspindel angetrieben zu werden, wobei die Schaltscheibe ferner in die Antriebswelle (1) eingreift; eine Einrückscheibe (33), die in die Gangschaltscheibe und die Antriebswelle (1) eingreift, wobei auf zwei Seiten der Einrückscheibe mehrere Paare Einrückschlitze symmetrisch in sie eingeformt sind; und mehrere Paare Einrückkeile (331, 332, 333, 334, 335), die zum Eingreifen in die Schlitze der Gangschaltscheibe und die Schlitze der Einrückscheibe geeignet sind, wodurch die Einrückkeile, wenn sich die Gangschaltscheibe dreht, sequentiell aus den Schaltschlitzen herausgleiten oder in sie eingreifen können und an ihren entgegengesetzten vorstehenden Enden in Eingriff kommen können, um zu bewirken, daß entsprechende Schiebemuffen miteinander in Eingriff kommen oder voneinander getrennt werden, wodurch die Antriebswellenkraft vom Antriebsrädersatz nach außen übertragen werden kann.

19. Getriebe nach Anspruch 1, wobei der Rückwärtsgang der Vorwärtsgang-/Rückwärtsgangbaugruppe (8) durch einen Keil mit dem hinteren Abschnitt der Antriebswelle (1) in Eingriff ist und das Zwischenrad (41) mit einer Befestigungswelle (43), die parallel zur Antriebswelle ist und im Gehäuse befestigt ist, drehbar im Gehäuse (10) befestigt ist.

20. Getriebe nach Anspruch 1, wobei die getriebene Welle (5) an der anderen Seite des Gehäuses als die Antriebswelle (1) angeordnet ist, wobei ein Ende der getriebenen Welle mit einem Lager (642) verbunden ist, wobei in die getriebene Welle ein Öldurchlaß eingeformt ist, der zum Öleinlaß des Lagers verläuft, wobei zwischen der getriebenen Welle und der Abtriebswelle (9) ein Zwischenraum besteht.

21. Getriebe nach Anspruch 1, wobei die zweite Steuereinrichtung der Vorwärtsgang-/Rückwärtsgang/Leerlaufschaltbaugruppe einen Handbetätigungshebel (71) aufweist, der sich in das Gehäuse erstreckt, wobei der Hebel mit einer Schaltscheibe (72) verbunden ist, in die zwei Paar Schaltschlitze (721, 726) eingeformt sind, die auf zwei Seiten von der Mitte der Schaltscheibe radial symmetrisch angeordnet sind, wobei die Schaltscheibe und eine Einrückscheibe (73) beide am mittleren Abschnitt der getriebenen Welle (5) angeordnet sind, wobei auf zwei Seiten von der Mitte der Einrückscheibe zwei Paar Einrückschlitze radial symmetrisch angeordnet sind und zwei Paar Einrückkeile (731, 736) in den Einrückschlitzen und Schaltschlitzen gleiten können, wodurch der Handbetätigungshebel zum Schalten der Vorwärtsgang-, Leerlauf- und Rückwärtsgangstellung verwendet werden kann.

22. Getriebe nach Anspruch 1, wobei jede Schiebemuffe (74, 75) der Vorwärtsgang-/Rückwärtsgang/Leerlaufschaltbaugruppe einen Flansch hat und zwischen dem Flansch und dem hinteren Ende der entsprechenden Zahnradmuffe eine Drehfeder (741, 751) angeordnet ist, wodurch der Einrückkeil, wenn die zweite Steuereinrichtung auf Leerlauf schaltet, nicht bewegt wird und, wenn auf Vorwärtsgang geschaltet wird, nur der innere Einrückkeil herausgleitet, um den Flansch der inneren Schiebemuffe (75) zu bewegen, so daß die Schiebemuffe verschoben wird und zum Antreiben mit der Vorwärtsgangmuffe in Eingriff kommt, und, wenn auf Rückwärtsgang geschaltet wird, nur der äußere Einrückkeil herausgleitet, um den Flansch der äußeren Schiebemuffe (74) zu bewegen, so daß die Schiebemuffe verschoben wird und zum Antreiben mit der Rückwärtsgangmuffe in Eingriff kommt, und die betreffenden Drehfedern (741, 751) verwendet werden, um jede Schiebemuffe und jeden Einrückkeil beim Umschalten vorzudrücken, wobei das Flanschende jeder Schiebemuffe mit einem Lager mit einem angeformten Öleinlaß versehen ist.

23. Getriebe nach Anspruch 1, wobei die innere Muffe der Vorwärtsgang-/Rückwärtsgangbaugruppe die auf die Abtriebswelle (9) aufgeschraubte Vorwärtsgangmuffe ist und die äußere Muffe die mit dem Zwischenrad (41) in Eingriff befindliche Rückwärtsgangmuffe ist und wobei im Leerlauf weder die innere noch die äußere Muffe angetrieben wird.

24. Getriebe nach Anspruch 1, wobei die vierte Kupplungseinrichtung eine betreffende Feder (741, 751) für die innere und die äußere Muffe (81, 82) aufweist, wobei ein Ende jeder Feder in eine Aussparung eingreift, die an einem Ende der betreffenden Muffe an einer Innenfläche davon geformt ist, wobei sich das andere Ende jeder Feder axial heraus erstreckt, wodurch im Vorwärtsgang das verlängerte Ende der Feder in der inneren Muffe in eine Aussparung in der inneren Schiebemuffe eingreift und auf der getriebenen Welle eng festgezogen wird, um die innere Muffe rotationsmäßig anzutreiben und ferner die Abtriebswelle rotationsmäßig anzutreiben, und wodurch im Rückwärtsgang das verlängerte Ende der Feder in der äußeren Muffe in eine Aussparung in der äußeren Schiebemuffe eingreift und auf der inneren Muffe eng festgezogen wird, so daß die äußere Muffe die Abtriebswelle durch das Zwischenrad rotationsmäßig antreibt, so daß die Abtriebswelle Kraft nach außen abgibt.

25. Getriebe nach Anspruch 1, wobei jede Muffe (81, 82) der Vorwärtsgang-/Rückwärtsgangbaugruppe mit einem Lager (822) verbunden ist, das sich an ihrer inneren Oberfläche am Zahnradende der Rückwärtsgangmuffe befindet, und ferner mit einem Lager (823) verbunden ist, das sich an ihrer äußeren Oberfläche befindet und im Gehäuse befestigt ist, wobei jedes Lager mit einem Öleinlaß geformt ist.

26. Getriebe nach Anspruch 1, wobei am Boden des Gehäuses eine Ölspeichereinrichtung angeordnet ist, um die obengenannten Elemente zu schmieren, und Öldurchlässe geformt sind für die Kommunikation der Ölspeichereinrichtung mit jedem Element.

## Revendications

1. Transmission comprenant :
un carter (10), un arbre d'entrée (1) et un arbre de sortie (9) ;
l'arbre d'entrée ayant une demi-partie avant et une demi-partie arrière;
un ensemble d'engrenages menants (2) ayant plusieurs manchons dentés menants (21, 22, 23, 24, 25) dont le nombre est égal au nombre de rapports de vitesses de la transmission, les manchons dentés menants ayant des diamètres respectifs différents et étant montés sur la demi-partie avant de l'arbre d'entrée dans l'ordre du plus petit diamètre au plus grand diamètre, chaque manchon denté menant ne pouvant pas être entraîné en rotation en permanence par l'arbre d'entrée;
un ensemble de commande de marche avant (3) ayant plusieurs manchons coulissants (34, 35, 36, 37, 38) de différents diamètres, dont le nombre est égal à celui des rapports de vitesses, les manchons coulissants étant montés sur la demi-partie arrière de l'arbre d'entrée dans l'ordre du plus petit diamètre au plus grand diamètre, un premier moyen de commande étant utilisé pour commander l'engagement et la séparation des manchons coulissants et des manchons dentés menants correspondants pour sélectionner le rapport de vitesse, chaque manchon coulissant pouvant être entraîné en rotation par l'arbre d'entrée et pouvant s'engager avec son manchon denté correspondant pour causer sa rotation;
un ensemble de marche arrière (4) ayant un pignon de marche arrière (40) monté sur l'extrémité arrière de l'arbre d'entrée, le pignon de marche arrière s'engageant avec un pignon de renvoi (41) ;
un arbre mené (5) ayant une partie avant, une partie centrale et une partie arrière;
un ensemble pignon mené (6) ayant plusieurs manchons dentés menés (61, 62, 63, 64) et un pignon mené (65) dont le nombre combiné est égal au nombre de manchons dentés menants, les manchons dentés menés ayant des diamètres différents respectifs et étant montés sur la partie avant de l'arbre mené dans l'ordre du plus petit diamètre au plus grand diamètre et s'engrenant avec les manchons dentés menants respectifs, chaque manchon denté mené ayant un troisième moyen d'accouplement (611, 621, 631, 641, 651) qui relie les manchons dentés menés les uns avec les autres et relie les manchons dentés menés avec l'arbre mené (5) de telle sorte que, lorsque chaque manchon denté menant tourne, le manchon denté mené s'engrenant avec lui est entraîné en rotation et entraîne en rotation dans l'ordre de l'extérieur vers l'intérieur chaque manchon denté mené et l'arbre mené;
un ensemble d'engrenages de marche avant/arrière (8) ayant deux manchons (81, 82) de diamètres différents, les manchons étant montés sur la partie arrière de l'arbre mené dans l'ordre du plus petit diamètre au plus grand diamètre, l'un des manchons étant un manchon de marche avant, l'autre des manchons étant un manchon de marche arrière ayant des dents qui s'engrènent avec le pignon de renvoi, chaque manchon ayant un quatrième moyen d'accouplement qui relie l'arbre mené avec chaque manchon de telle sorte que l'arbre mené ou le pignon de renvoi peut entraîner chaque manchon en rotation;
un ensemble de commande de marche avant/marche arrière/point mort (7) ayant deux manchons coulissants (74,75) de diamètres différents, les manchons coulissants étant montés sur la partie centrale de l'arbre mené, celui de petit diamètre à l'intérieur de celui de grand diamètre, un deuxième moyen de commande étant utilisé pour commander la séparation et l'engagement des manchons coulissants (74,75) et les manchons de marche avant/marche arrière (81,82) pour sélectionner la marche avant ou arrière ou le point mort, chaque manchon coulissant (74,75) entraînant en rotation un manchon correspondant 81,82) ; et
l'arbre de sortie (9) étant relié à l'ensemble de marche avant/marche arrière.

2. Transmission selon la revendication 1, dans laquelle l'arbre d'entrée est relié à un moyen de levier extérieur de commande et disposé dans le carter (10) d'un côté de celui-ci, chaque extrémité de l'arbre d'entrée traversant le carter et étant reliée au carter par un roulement respectif (11, 12), une entrée d'huile étant disposée dans le carter.

3. Transmission selon la revendication 1, dans laquelle chaque manchon denté menant (21, 22, 23, 24, 25) et manchon denté mené (61, 62, 63, 64) a une partie manchon et une partie dentée qui en fait partie intégrante, chaque partie dentée dépassant vers l'extérieur de la surface extérieure de la partie manchon respective, les parties dentées étant disposées en séquence et, à l'extrémité dentée de chaque manchon denté, un roulement intérieur (212, 222, 232, 242, 252, 612, 622, 632, 642) étant muni d'une entrée d'huile.

4. Transmission selon la revendication 3, dans laquelle les parties dentées des manchons dentés menants s'engrènent avec les parties dentées des manchons dentés menés de telle manière que le manchon denté menant le plus à l'intérieur (21) s'engrène avec le manchon denté mené le plus à l'extérieur (61), le deuxième manchon denté menant le plus à l'intérieur (22) s'engrène avec le deuxième manchon denté mené le plus à l'extérieur (62), le deuxième manchon denté menant le plus à l'extérieur (24) s'engrène avec le deuxième manchon denté mené le plus à l'intérieur (64) et le manchon denté menant le plus à l'extérieur (25) s'engrène avec le pignon mené le plus à l'intérieur (65), et les manchons dentés intermédiaires s'engrènent de manière correspondante.

5. Transmission selon la revendication 1, dans laquelle chaque manchon denté menant (21, 22, 23, 24, 25) est muni d'un premier moyen d'accouplement de telle sorte que l'arbre d'entrée peut entraîner en rotation le manchon denté menant voisin (21) et les autres manchons dentés menants.

6. Transmission selon la revendication 1, dans laquelle chaque manchon denté mené (61, 62, 63, 64) est muni intérieurement d'un troisième moyen d'accouplement qui est un ressort respectif (611, 621, 631, 641), une extrémité de chaque ressort étant engagée dans une fente formée près de la partie dentée du manchon denté mené respectif, et l'extrémité axialement opposée de chaque ressort se prolongeant vers l'extérieur, de telle sorte que le manchon denté mené peut être entraîné en rotation par la rotation du manchon denté menant correspondant, ce qui fait serrer le ressort à l'intérieur du manchon denté mené sur le manchon denté mené voisin intérieurement pour entraîner celui-ci en rotation et, en conséquence, les manchons dentés menés intérieurs sont entraînés en séquence et, lorsqu'ils ne sont pas entraînés, le ressort est disposé librement avec un jeu sur le manchon denté mené intérieur.

7. Transmission selon la revendication 1, dans laquelle chaque manchon coulissant (34, 35, 36, 37, 38) de l'ensemble de commande de marche avant est muni intérieurement d'un deuxième moyen d'accouplement et la surface intérieure d'une extrémité de chaque manchon coulissant est munie d'un roulement comportant une entrée d'huile.

8. Transmission selon la revendication 6, dans laquelle le troisième moyen d'accouplement pour le pignon mené le plus à l'intérieur (65) est une clavette (651) située à l'intérieur du pignon mené le plus à l'intérieur (65) de telle sorte que celui-ci est engagé avec l'arbre mené par la clavette de manière que le manchon denté mené le plus à l'intérieur puisse entraîner directement en rotation l'arbre mené.

9. Transmission selon la revendication 1, dans laquelle chaque manchon denté mené (61, 62, 63, 64) est muni d'un roulement (613, 623, 633, 643) près d'une extrémité de sa partie manchon pour s'engager avec la surface extérieure du manchon denté mené voisin intérieurement, les manchons dentés menés étant reliés au carter par un roulement (51), chaque roulement comportant une entrée d'huile.

10. Transmission selon la revendication 5, dans laquelle le premier moyen d'accouplement à l'intérieur de chaque manchon denté menant (21, 2, 23, 24, 25) comprend un ressort (211, 221, 231, 241, 251), une extrémité de chaque ressort étant engagée dans une fente (213) formée dans le manchon denté menant correspondant près de la partie dentée, l'autre extrémité de chaque ressort s'étendant axialement à l'extérieur du manchon denté de telle sorte que, en l'absence d'entraînement, il existe un jeu entre chaque ressort et le manchon denté menant voisin intérieurement ou l'arbre d'entrée et, lorsqu'il y a entraînement, le ressort est serré étroitement sur le manchon denté menant voisin intérieurement de telle sorte que l'arbre d'entrée ou le manchon denté menant voisin peut entraîner en rotation le manchon denté menant adjacent.

11. Transmission selon la revendication 5, dans laquelle le premier moyen d'accouplement à l'intérieur de chaque manchon denté menant (21, 22, 23, 24, 25) comprend un ressort (211, 221, 231, 241, 251) dont une extrémité est engagée dans une fente (213) formée dans le manchon denté menant correspondant près de la partie dentée et dont l'autre extrémité (2111) est diminuante de telle sorte que, en l'absence d'entraînement, il existe un jeu entre le ressort et le manchon denté menant voisin intérieurement ou l'arbre d'entrée.

12. Transmission selon la revendication 10, dans laquelle l'autre extrémité de chaque ressort (211) a un évidement ou une partie en saillie (215) de telle sorte que, lorsqu'il y a entraînement, l'évidement ou la partie en saillie est engagé(e) avec une partie en saillie ou un évidement (345) du manchon coulissant correspondant pour assurer l'entraînement en rotation.

13. Transmission selon la revendication 5, dans laquelle le premier moyen d'accouplement à l'intérieur de chaque manchon denté menant comprend un ressort (211, 221, 231, 241, 251) dont le diamètre intérieur est plus petit que le diamètre extérieur du manchon denté menant voisin intérieurement ou de l'arbre d'entrée devant être emboîté, de telle sorte que, lorsque le ressort est soumis à une torsion, il peut être monté dessus, une extrémité (2112) du ressort étant engagée avec une fente formée sur le manchon denté menant près de la partie dentée, l'autre extrémité du ressort ayant une extrémité en saillie triangulaire (2113), un jeu existant entre le ressort et la surface intérieure du manchon denté menant voisin extérieurement.

14. Transmission selon la revendication 7, dans laquelle le deuxième moyen d'accouplement pour le manchon coulissant le plus à l'intérieur (34) comprend une saillie (101, 349) formée sur une partie prédéterminée de l'arbre d'entrée pour assurer l'engagement avec une fente (344; 218) formée dans le manchon coulissant le plus intérieur de l'ensemble de commande de marche avant de telle sorte que l'arbre d'entrée peut entraîner en rotation le manchon coulissant.

15. Transmission selon la revendication 7, dans laquelle le deuxième moyen d'accouplement comprend une saillie (349) disposée sur une partie prédéterminée de chaque manchon coulissant (34) de l'ensemble de commande de marche avant, la saillie étant adaptée pour s'engager avec une fente (344) formée sur le manchon coulissant extérieur voisin, de telle sorte que le manchon coulissant intérieur peut entraîner en rotation le manchon coulissant voisin extérieurement.

16. Transmission selon la revendication 7, dans laquelle le deuxième moyen d'accouplement comprend un flasque (343) disposé sur chaque manchon coulissant et un ressort de torsion respectif (341) est disposé entre le flasque et une extrémité du manchon denté menant correspondant de telle sorte que, lorsque le manchon coulissant n'est pas entraîné, il est poussé par le ressort de torsion.

17. Transmission selon les revendications 7 et 13, dans laquelle le deuxième moyen d'accouplement comprend une extrémité en saillie (348) formée à une extrémité de chaque manchon coulissant (34, 35, 36, 37, 38), qui est adaptée pour s'engager avec l'extrémité triangulaire en saillie (2113) du ressort du premier moyen d'accouplement du manchon denté menant (21), l'extrémité en saillie (348) du moyen d'accouplement comportant une saillie (349) adaptée pour s'engager dans une fente (218) formée dans le manchon denté menant, une gorge annulaire (347) étant formée à l'autre extrémité du manchon coulissant, dans la gorge annulaire étant disposé un collier formé de deux éléments semi-circulaires (343) dont chacun a deux extrémités en saillie (3431) comportant chacune un trou (3422), une vis (3434) et un écrou étant utilisés pour passer dans les trous pour fixer le collier dans la gorge annulaire du manchon coulissant, chaque élément semi-circulaire ayant une saillie (3433) reliée à une extrémité du premier moyen de commande devant être déplacé par l'ensemble de commande de marche avant de telle manière que, lorsque le manchon coulissant est entraîné, il s'engage avec l'extrémité en saillie du ressort, si bien que le ressort n'est pas serré étroitement sur le manchon denté menant voisin intérieurement pour empêcher l'entraînement et, inversement, lorsque le manchon coulissant est ramené en arrière, le ressort est serré étroitement pour entraîner le manchon denté menant extérieur.

18. Transmission selon la revendication 1, dans laquelle le premier moyen de commande de l'ensemble de commande de marche avant comprend :
un microprocesseur (312) capable de gérer les données envoyées par plusieurs moyens de détection disposés à des positions prédéterminées et de transmettre des commandes d'action après analyse;
un moteur pas-à-pas (311) acceptant les commandes envoyées par le microprocesseur et produisant un mouvement en fonction des commandes;
une tige filetée (31) entraînée par le moteur pour faire changer la position de vitesse par l'ensemble de commande de marche avant;
un disque de sélection des rapports (32) ayant plusieurs paires de fentes de sélection (321, 322, 323, 324, 325) dont le nombre est égal à celui des rapports, les fentes étant disposées radialement de telle manière que la fente intérieure (321) est plus courte et la fente extérieure (325) est plus grande, et toutes les fentes sont alignées entre elles et symétriquement disposées des deux côtés du centre du disque, la périphérie du disque denté comportant des dents qui s'engrènent avec le filetage de la tige filetée pour être entraîné par la tige filetée, le disque de sélection s'engageant en outre avec l'arbre d'entrée (1) ;
un disque d'engagement (33) s'engageant avec le disque de sélection et l'arbre d'entrée (1), plusieurs paires de fentes d'engagement étant formée symétriquement dans le disque d'engagement de chaque côté de celui-ci; et
plusieurs paires de clavettes d'engagement (331, 332, 333, 334, 335) adaptées pour s'engager avec les fentes du disque de sélection des rapports et du disque d'engagement de telle sorte que, lorsque le disque de sélection pivote, les clavettes peuvent se dégager ou s'engager avec les fentes de sélection en séquence et s'engager à leurs extrémités opposées en saillie pour faire engager entre eux les manchons coulissants correspondants ou les faire séparer les uns des autres, ce qui permet de transmettre vers l'extérieur le mouvement de l'arbre d'entrée à partir du train d'engrenages menants.

19. Transmission selon la revendication 1, dans laquelle le pignon de marche arrière de l'ensemble de marche avant/arrière (8) est engagé avec la demi-partie arrière de l'arbre d'entrée (1) par une clavette et le pignon de renvoi (41) est fixé de manière à tourner dans le carter (10) par un arbre de montage (43) qui est parallèle à l'arbre d'entrée et fixé dans le carter.

20. Transmission selon la revendication 1, dans laquelle l'arbre mené (5) est disposé de l'autre côté du carter par rapport à l'arbre d'entrée (1), une extrémité de l'arbre mené est reliée à un roulement (642), un conduit d'huile étant formé dans l'arbre mené, qui va à l'entrée d'huile du roulement, un espace existant entre l'arbre mené et l'arbre de sortie (9).

21. Transmission selon la revendication 1, dans laquelle le deuxième moyen de commande de l'ensemble de commande de sélection de marche avant/marche arrière/point mort comprend un levier de commande manuelle (71) entrant dans le carter, le levier étant relié à un disque de sélection (72) qui comporte deux paires de fentes de sélection (721, 726) disposées radialement et symétriquement des deux côtés du centre du disque de sélection, le disque de sélection et un disque d'engagement (73) étant tous deux montés sur la partie centrale de l'arbre mené (5), deux paires de fentes d'engagement étant disposées radialement et symétriquement des deux côtés du centre du disque d'engagement et deux paires de clavettes d'engagement (731, 736) étant capables de coulisser dans les fentes d'engagement et les fentes de sélection, de telle sorte que le levier de commande manuelle peut être utilisé pour commander la position de la marche avant, du point mort et de la marche arrière.

22. Transmission selon la revendication 1, dans laquelle chaque manchon coulissant (74, 75) de l'ensemble de commande de marche avant/marche arrière/point mort a un flasque, et un ressort de torsion (741, 751) est disposé entre le flasque et l'extrémité arrière du manchon denté correspondant de telle sorte que, lorsque le deuxième moyen de commande passe au point mort, la clavette d'engagement n'est pas déplacée et, lorsqu'il est amené en marche avant, seule la clavette d'engagement intérieure sort pour déplacer le flasque du manchon coulissant intérieur (75), ce qui fait coulisser le manchon coulissant et le fait engager avec le manchon de marche avant pour assurer l'entraînement et, lorsqu'il est amené en marche arrière, seule la clavette d'engagement extérieure sort pour déplacer le flasque du manchon coulissant extérieur (74), ce qui fait coulisser le manchon coulissant et le fait engager avec le manchon de marche arrière pour assurer l'entraînement, et les ressorts de torsion respectifs (741, 751) sont utilisés pour pousser chaque manchon coulissant et la clavette d'engagement lors des changements de marche, l'extrémité flasque de chaque manchon coulissant étant munie d'un roulement comportant une entrée d'huile.

23. Transmission selon la revendication 1, dans laquelle le manchon intérieur de l'ensemble marche avant/arrière est le manchon de marche avant vissé sur l'arbre de sortie (9), et le manchon extérieur est le manchon de marche arrière (82) qui s'engrène avec le pignon de renvoi (41) et, au point mort, ni le manchon intérieur ni le manchon extérieur n'est entraîné.

24. Transmission selon la revendication 1, dans laquelle le quatrième moyen d'accouplement comprend un ressort respectif (741, 751) pour les manchons intérieur et extérieur (81, 82), une extrémité de chaque ressort s'engageant dans un évidement formé à une extrémité du manchon respectif sur une surface intérieure de celui-ci, l'autre extrémité de chaque ressort se prolongeant axialement vers l'extérieur de telle sorte que, en marche avant, l'extrémité prolongée du ressort à l'intérieur du manchon intérieur s'engage avec un évidement dans le manchon coulissant intérieur et est serrée étroitement sur l'arbre mené pour entraîner en rotation le manchon intérieur et pour entraîner en outre en rotation l'arbre de sortie et, en marche arrière, l'extrémité prolongée du ressort à l'intérieur du manchon extérieur s'engage dans un évidement dans le manchon coulissant extérieur et est serrée étroitement sur le manchon intérieur, ce qui fait entraîner en rotation l'arbre de sortie par le manchon extérieur, par l'intermédiaire du pignon de renvoi, si bien que l'arbre de sortie transmet le mouvement vers l'extérieur.

25. Transmission selon la revendication 1, dans laquelle chaque manchon (81, 82) de l'ensemble de marche avant/arrière est relié à un roulement (822) situé sur sa surface intérieure à l'extrémité dentée du manchon de marche arrière, et est en outre relié à un roulement (823) situé sur sa surface extérieure et fixé dans le carter, chaque roulement comportant une entrée d'huile.

26. Transmission selon la revendication 1, dans laquelle un moyen de stockage d'huile est disposé au fond du carter pour lubrifier les éléments sus-mentionnés et des conduits d'huile sont formés pour faire communiquer le moyen de stockage de l'huile avec chaque élément.
